Europäisches Patentamt

European Patent Office

Office européen des brevets

(19)

(11) **EP 1 121 665 B1**

(12) **FASCICULE DE BREVET EUROPEEN**

(45) Date de publication et mention
de la délivrance du brevet:
**26.03.2003 Bulletin 2003/13**

(21) Numéro de dépôt: **99949060.0**

(22) Date de dépôt: **15.10.1999**

(51) Int Cl.⁷: $G06T\ 17/20$

(86) Numéro de dépôt international:
**PCT/FR99/02524**

(87) Numéro de publication internationale:
**WO 00/022577 (20.04.2000 Gazette 2000/16)**

(54) **PROCEDE DE CODAGE D'UN MAILLAGE SOURCE, AVEC OPTIMISATION DE LA POSITION D'UN SOMMET RESULTANT D'UNE FUSION D'ARETE, ET APPLICATIONS CORRESPONDANTES**

VERFAHREN ZUR QUELLNETZKODIERUNG MIT OPTIMIERUNG DER LAGE EINER ECKE DIE SICH AUS EINER KANTENZUSAMMENFÜHRUNG ERGIBT UND DEREN ANWENDUNG

SOURCE MESH CODING METHOD OPTIMISING VERTEX POSITION RESULTING FROM EDGE FUSION, AND CORRESPONDING APPLICATIONS

(84) Etats contractants désignés:
**DE ES GB IT SE**

(30) Priorité: **15.10.1998 FR 9813090**
**11.01.1999 FR 9900304**

(43) Date de publication de la demande:
**08.08.2001 Bulletin 2001/32**

(73) Titulaires:
• **FRANCE TELECOM**
**75015 Paris (FR)**
• **TELEDIFFUSION DE FRANCE**
**75732 Paris Cédex 15 (FR)**

(72) Inventeurs:
• **LAURENT-CHATENET, Nathalie**
**F-35000 Rennes (FR)**
• **SANSON, Henri**
**F-35690 Acigné (FR)**

• **ALLIEZ, Pierre**
**F-35510 Cesson Sévigné (FR)**

(74) Mandataire: **Vidon, Patrice**
**Cabinet Patrice Vidon**
**Le Nobel (Bât. A)**
**Technopole Atalante**
**2, allée Antoine Becquerel**
**BP 90333**
**35703 Rennes Cedex 7 (FR)**

(56) Documents cités:
**US-A- 5 590 248**

• **KLEIN R ET AL: "MESH REDUCTION WITH ERROR CONTROL" VISUALIZATION '96. PROCEEDINGS OF THE VISUALIZATION CONFERENCE, SAN FRANCISCO, OCT. 27 - NOV. 1, 1996, 27 octobre 1996 (1996-10-27), pages 311-318, XP000704204 YAGEL R;NIELSEN G M**

**Description**

## *1. Domaine de l'invention et applications*

### 1.1 Domaine de l'invention

Le domaine de l'invention est celui du codage de structures de données géométriques, ou maillages, notamment de grande taille. Plus précisément, l'invention concerne la représentation et le codage d'objets ou de scènes en trois dimensions. Plus précisément encore, l'invention concerne une technique d'approximation d'un maillage source en trois dimensions pouvant être utilisée seul, ou en combinaison avec d'autres techniques connues. Dans ce dernier cas, le procédé de l'invention peut constituer une étape avantageuse d'initialisation.

Un maillage est classiquement défini par un ensemble de sommets et de faces orientées définissant une topologie. De tels maillages sont par exemple utilisés en graphisme sur ordinateur, pour modéliser des objets en trois dimensions avec une complexité géométrique limitée.

L'approximation d'un maillage M consiste à trouver un maillage M' dont la complexité géométrique est moindre que celle du maillage M, et qui approche au mieux la géométrie de M.

### 1.2 Exemples d'applications

L'invention trouve des applications dans tous les domaines où il est souhaitable de réduire le nombre d'informations nécessaires pour représenter et/ou manipuler efficacement un objet en trois dimensions ou un ensemble d'objets, par exemple pour l'analyser, le stocker et/ou le transmettre et/ou en assurer le rendu.

A titre indicatif, l'invention peut notamment s'appliquer au domaine de :

- la réalité virtuelle (visites ou boutiques virtuelles, loisirs, télémanipulation, etc...). Dans ce type d'application, l'approximation de maillages permet de réduire le coût de rendu de scènes complexes, en particulier en définissant la notion d'échelonnabilité sur les maillages (fonction du point de vue, des capacités graphiques, du taux de rafraîchissement souhaité, ...). Dans le cas de la réalité virtuelle distribuée ou partagée, cela permet également d'adapter la complexité d'une scène aux capacités de rendu et de stockage des différents terminaux, ainsi qu'aux débits des réseaux ;
- la simulation scientifique (éléments finis, CAO, etc...). La réduction de la complexité géométrique des modèles permet une accélération des temps de calcul, une prise de décisions plus rapide, notamment lors de la conception en CAO, et l'élimination des informations redondantes dans une base de données 3D ;
- la modélisation (scanner 3D (reconstruction de surfaces à partir de points non organisés), scanners volumiques, reconstruction de surfaces à partir de photos stéréoscopiques ou de séquences vidéo, de modèles numériques de terrains (imagerie satellite ou radar), etc...). Un modèle numérique de terrain permet ainsi l'obtention d'un maillage représentant la topologie d'une région. Un tel maillage est obtenu par l'échantillonnage régulier d'une image stockant l'information d'altitude en chaque point. Il en résulte une quantité de données importante, comprenant des informations inutiles pour la simulation scientifique, ou trop coûteuse pour le rendu (dans le cas de simulateurs). L'approximation de maillages réduit la quantité de données, tout en garantissant une bonne fidélité géométrique aux données initiales et la conservation de la topologie.

## *2. Art antérieur*

### 2.1 Les familles d'algorithmes

Plusieurs techniques d'approximation de maillages sont déjà connues. Les plus répandues peuvent être classées en trois grandes familles d'algorithmes selon qu'elles fonctionnent par :

- décimation ;
- ré-échantillonnage sous-critique ;
- subdivision adaptative.

### 2.1.1 décimation

La décimation consiste à retirer de manière itérative des sommets et/ou des faces d'un maillage. Cette opération est appelée opération élémentaire de simplification. Les méthodes mettant en oeuvre ce principe de décimation peuvent également optimiser les positions des sommets après ou pendant la simplification, cette dernière étant choisie de manière à préserver au mieux la topologie du maillage. Un exemple de cette technique est présenté dans le document US-5,590,248.

### 2.1.2 ré-échantillonnage sous-critique

Le ré-échantillonnage consiste à échantillonner un modèle original, soit en prenant des points aléatoirement sur sa surface et en retriangulant ensuite soit en définissant une grille tridimensionnelle et en agglomérant les sommets dans chaque boîte élémentaire de la grille. Le modèle ainsi généré est simplifié, et doit approximer au mieux les données initiales. Cette technique est rapide, mais ne conserve pas la topologie ni les caractéristiques visuellement importantes des maillages.

### 2.1.3 subdivision adaptative

La subdivision adaptative commence avec un modèle comportant une géométrie très simple, que l'on subdivise récursivement ensuite, en ajoutant à chaque itération un détail dans les régions ou l'erreur d'approximation est maximale.

### 2.1.4 combinaisons d'algorithmes

De façon à permettre une approximation d'un maillage avec une qualité de reconstruction satisfaisante, il est nécessaire de combiner une décimation et une optimisation des positions des sommets conservés. En d'autres termes, l'objectif de base d'un procédé de codage d'un maillage source étant de maximiser la qualité de l'approximation pour une complexité géométrique donnée, celui-ci doit notamment présenter les propriétés suivantes :

- décimation ;
- préservation de la topologie ;
- optimisation des positions, suivant un critère d'erreur prédéfini.

On connaît ainsi une première méthode appelée « remaillage », répondant à ces critères. Elle est notamment présentée dans le document « retiling polygonal surfaces » par Greg TURK (SIGGRAPH 92 Conference proceedings, p. 55-64, 92). Elle fonctionne par échantillonnage, décimation et optimisation des positions. Elle permet de paramétrer le nombre de niveaux de résolution souhaités et le nombre final de sommets pour chacun d'eux.

L'algorithme débute par une distribution aléatoire du nombre de sommets paramétrés sur la surface du modèle, puis optimise leur position en les liant par des forces de répulsion (fonctions de la courbure locale). Il triangule ensuite les polygones ainsi formés, en incluant les sommets du maillage original. Enfin, on décime le modèle un sommet après l'autre (si cette opération conserve la topologie locale) puis on retriangule le trou résultant.

On obtient ainsi un modèle raffiné dans les régions de forte courbure et décimé sur les régions planes.

Un inconvénient de cette méthode est qu'elle présente une partie aléatoire. En conséquence, deux décimations successives ne donnent pas le même résultat. Par ailleurs, cette technique a tendance à lisser les discontinuités dans la plupart des situations.

De plus, la fidélité aux données initiales n'est pas exprimée directement au cours de l'optimisation des positions.

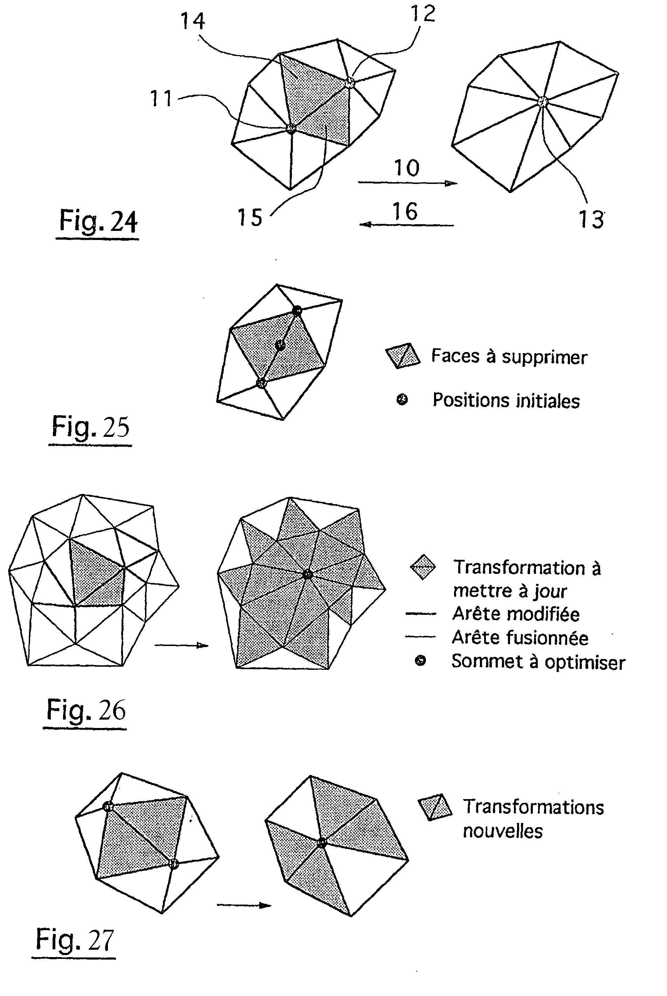

Une autre technique, appelée "codage progressif de maillages", a été développée par Hugues HOPPE, dans le document "Progressive meshes" (SIGGRAPH 96 Conference Proceedings, pages 99-108, 1996). Elle repose sur la décimation et l'optimisation des points. Cette technique est décrite plus en détail en annexe 1, en relation avec les figures 24 à 27, de façon à ne pas surcharger la présente discussion. Il est clair cependant que cette annexe 1, ainsi que l'annexe 2, font partie intégrante de la description.

Cette technique de codage progressif de maillages présente différents inconvénients. Notamment, elle ne conserve pas naturellement les discontinuités ou singularités géométriques, ce qui suppose une gestion de cas particuliers, tels que les coins, les arêtes vives finissantes et les arêtes vives régulières, pour éviter des ruptures de topologie. Cela entraîne des calculs complexes, difficiles à mettre en oeuvre, et suppose des paramétrages peu aisés (qu'est-ce qu'une arête vive ? Comment pondérer le terme de ressort pour éviter de lisser les surfaces ? ...).

Par ailleurs, elle n'est pas efficace pour caractériser les différences perceptuelles entre deux maillages.

## 3. *Objectifs de l'invention*

L'invention concerne en particulier la technique de décimation mise en oeuvre, par exemple, par ces différentes techniques de codage de maillage, ou par d'autres.

L'invention a notamment pour objectif de pallier les différents inconvénients des techniques connues.

Ainsi, un objectif de l'invention est de fournir un procédé de simplification de maillage par décimation (fusion d'arêtes), qui soit plus efficace, en termes de qualité perceptuelle, que les techniques connues.

En d'autres termes, un objectif de l'invention est de fournir un tel procédé présentant, jusqu'à un niveau élevé de décimation, une conservation des singularités des maillages, et une préservation de la topologie.

L'invention a également pour objectif de fournir un tel procédé, qui soit simple à mettre en oeuvre, en termes de calculs à effectuer, et qui présente une bonne vitesse d'exécution.

Selon un premier aspect de l'invention, un autre objectif est de fournir un tel procédé, qui puisse être utilisé seul, afin de fournir une méthode rapide de simplification de maillages.

Selon un deuxième aspect de l'invention, un objectif est de fournir un tel procédé de décimation, qui puisse être utilisé, de façon à l'améliorer, dans un procédé d'optimisation géométrique de maillage.

Selon encore un autre aspect de l'invention, un objectif de l'invention est de fournir un procédé de codage d'un maillage source en trois dimensions, présentant un meilleur rapport qualité de l'approximation/complexité géométrique que les techniques connues.

Notamment, l'invention a pour objectif de fournir un tel procédé, respectant plus fidèlement les caractéristiques importantes à conserver (singularités ou discontinuités).

Un autre objectif de l'invention est de fournir un tel procédé, ne nécessitant pas une recherche et une gestion des cas particuliers (tels que les arêtes et les coins), ni la mise en oeuvre de paramètres spécifiques (par exemple critères de reconnaissance d'une arête, seuils, ...) qu'il est nécessaire de définir pour chaque maillage.

L'invention a encore pour objectif de fournir un tel procédé, qui permet une reconstruction successive du maillage, celui-ci étant reconnaissable, sous une représentation grossière, très rapidement.

L'invention a également pour objectif de fournir un tel procédé permettant de répondre aux fonctionnalités fixées dans le projet de standardisation ISO-MPEG4, à savoir :

- la compression de maillages, qui doit réduire fortement la quantité de données décrivant la géométrie, avec des pertes visuelles minimales ;
- la représentation progressive d'un maillage, permettant de définir un maillage sous la forme d'un maillage de base à faible résolution, et d'une séquence de raffinements;
- l'adaptation à une gamme de débits importante, la qualité étant acceptable, mais pour de très faibles débits.

### 4. caractéristiques principales de l'invention

#### 4.1 étude d'optimisation de la position des sommets

Ces objectifs, ainsi que d'autres qui apparaîtront plus clairement par la suite, sont atteints selon l'invention à l'aide d'un procédé de simplification d'un maillage source (M) représentatif d'un objet en trois dimensions, délivrant un maillage simplifié **(M')** correspondant audit maillage source **(M),** lesdits maillages étant définis par un ensemble de sommets, d'arêtes et/ou de faces, ledit procédé mettant en oeuvre une étape de décimation par fusion d'arête, consistant à associer à une arête à décimer, définie par deux sommets, un sommet unique, de façon à obtenir un maillage simplifié M'.

Ce procédé comprend une étape d'optimisation, ou de pseudo-optimisation, après ladite étape de décimation par fusion d'une arête, assurant le positionnement du sommet résultant de ladite fusion de manière à réduire la déviation géométrique entre ledit maillage source M et ledit maillage simplifié M'.

On respecte ainsi les particularités, notamment les arêtes vives du maillage.

Ladite étape de pseudo-optimisation peut avantageusement consister à dénombrer les arêtes vives autour des deux sommets formant l'arête à fusionner, et à distinguer les deux cas suivants :

- si les nombres d'arêtes vives sont les mêmes autour des deux sommets, on place le sommet résultant de la fusion au milieu du segment reliant lesdits sommets ;
- si les nombres d'arêtes vives sont différents, on place le sommet résultant de la fusion sur le sommet présentant le plus grand nombre d'arêtes vives.

#### 4.2 caractéristiques avantageuses de l'invention

L'invention peut notamment être mise en oeuvre à l'aide d'un algorithme organisé en deux parties : l'optimisation de positions et la décimation.

La décimation permet d'obtenir un maillage géométriquement simplifié, à partir du maillage original, tout en conservant la topologie et une bonne ressemblance avec ce maillage original.

L'optimisation des positions des sommets permet l'obtention de la meilleure approximation au sens de la métrique basée volume de l'invention.

En combinant décimation et optimisation, on peut générer soit un maillage sous forme progressive (en utilisant alternativement la décimation d'un sommet et une optimisation locale), soit des niveaux de résolution distincts (en utilisant successivement la décimation d'un ensemble de sommets et une optimisation globale).

De façon avantageuse, le procédé de l'invention comprend une étape de sélection d'une fusion d'arête à effectuer, parmi toutes les fusions d'arête possibles, tenant compte :

- d'au moins une information représentative de la courbure définie localement autour de l'arête considérée ;
- d'au moins une information représentative de la dynamique géométrique définie localement.

La prise en compte de ces deux critères permet, comme on le verra par la suite, d'optimiser le choix des fusions à effectuer, en supprimant en priorité les éléments les moins significatifs perceptuellement.

De façon préférentielle, ladite étape de sélection met en oeuvre une queue de priorité des arêtes à fusionner, en fonction d'un critère prioritaire, ladite information représentative de la courbure, puis d'un critère secondaire, ladite information représentative de la dynamique géométrique.

Cette hiérarchie de critères permet d'atteindre une bonne efficacité.

Avantageusement, ladite étape de sélection gère un seuil de courbure, seules les arêtes ayant une courbure inférieure audit seuil étant considérées pour l'application dudit critère secondaire, ledit seuil étant augmenté lorsqu'aucune arête ne présente plus une courbure inférieure à ce dernier.

Selon différents modes de réalisation particuliers, ladite information représentative de la dynamique géométrique peut appartenir au groupe comprenant :

- longueur de l'arête considérée ;
- une moyenne des surfaces des faces avoisinant ladite arête considérée ;
- une moyenne des longueurs des arêtes adjacentes aux sommets formant ladite arête considérée ;
- une combinaison de longueurs d'arêtes et/ou de surfaces de faces ;
- toute autre grandeur caractéristique reliée à la densité locale.

Comme on le verra par la suite, la prise en compte de la longueur de l'arête est une technique simple, et fournissant de très bons résultats.

La décimation peut notamment être interrompue en fonction d'un des critères appartenant au groupe comprenant:

- un taux de compression atteint ;
- une complexité géométrique atteinte, exprimée par un nombre de sommets ou de faces ;
- un seuil de courbure atteint.

Selon un premier mode de mise en oeuvre de l'invention, le procédé de simplification d'un maillage source constitue une étape d'initialisation d'un procédé d'optimisation géométrique d'un maillage.

L'invention concerne également un tel procédé d'optimisation géométrique d'un maillage source, comprenant une étape d'initialisation mettant en oeuvre le procédé de simplification décrit ci-dessus.

Selon un second mode de mise en oeuvre de l'invention, le procédé de simplification d'un maillage source peut être utilisé seul.

Ainsi, le procédé de codage de maillage peut mettre en met en oeuvre une étape de minimisation d'un volume compris entre ledit maillage source (M) et ledit maillage simplifié (M').

Ainsi, l'invention concerne une technique d'approximation de maillages utilisant une métrique basée volume, et non comme cela est classiquement le cas, une métrique considérant la distance entre un sommet et une surface (une telle distance n'étant d'ailleurs pas unique).

Cette approche nouvelle prend en compte naturellement les caractéristiques importantes à conserver (singularités) sans qu'il soit nécessaire de recourir à la détection de cas particuliers. Aucun paramétrage particulier n'est requis, avant le traitement d'un maillage : on minimise simplement le volume entre les deux maillages.

De façon avantageuse, chacun desdits maillages étant défini par la position de chacun de ses sommets et des arêtes les reliant, ladite étape de minimisation assure la détermination des positions des sommets $(X_1, X_2,... X_n)$ dudit maillage simplifié (M') minimisant le volume $V(M, M')$ entre ledit maillage source et ledit maillage simplifié.

Préférentiellement, ladite étape de minimisation met en oeuvre un processus itératif optimisant progressivement les positions des sommets dudit maillage simplifié (M').

Ledit processus itératif peut notamment être interrompu lorsqu'au moins un des critères d'arrêt suivants est atteint :

- un nombre (N) maximum d'itérations ;
- une différence entre deux vecteurs déplacement successifs des positions des sommets inférieure à un seuil pré-déterminé ($\varepsilon$).

Selon un mode de réalisation avantageux, ladite étape de minimisation met en oeuvre une méthode de gradient adaptatif. Cette méthode, ainsi qu'on le verra par la suite, permet de mettre en oeuvre l'invention avec une complexité de calcul réduite. En effet, il n'est alors pas nécessaire d'effectuer un calcul explicite du volume.

Dans ce cas, ladite méthode de gradient adaptatif peut avantageusement reposer sur les opérations suivantes:

- sélection d'un vecteur $X_p$ de $\mathbf{R}^{3n}$ ($n \geq 1$) dudit maillage simplifié, et calcul du gradient $\nabla E (X_p)$ en $X_p$ de la fonction à minimiser E=d(M,M');
- détermination de la position $X_p^*$ de $X_p$ dudit maillage, selon la relation définie à l'itération k+1 par :

$$X_p^{k+1} = X_p^{k} - \gamma_k \times \frac{\nabla E(X_p^{k})}{\left\|\nabla E(X_p^{k})\right\|}$$

k variant de 0 à n-1 (avec n < N) et $\gamma_k$ étant le pas de ladite relation ;
N représente le nombre d'itérations utiles pour atteindre la convergence (cette dernière étant atteinte lorsque la différence entre deux déterminations successives est inférieure à un seuil ($\varepsilon$) ou lorsqu'un nombre maximum d'itérations est atteint).

On peut noter que $X_p$ appartient à $\mathbf{R^3}$ si on effectue une optimisation locale ou à $\mathbf{R^{3n}}$ si on effectue une optimisation globale. En d'autres termes, on optimise les positions d'un sommet à la fois dans le cas d'une optimisation locale et de tous les sommets simultanément (sous la forme d'un unique vecteur de $\mathbf{R^{3n})}$ dans le cas d'une optimisation globale.

De façon préférentielle, ledit pas $\gamma_k$ est variable, et il varie en fonction de l'oscillation de deux déplacements successifs des sommets et/ou en fonction des variations de l'énergie. Il peut notamment être maintenu entre deux bornes $\gamma_{min}$ et $\gamma_{max}$.

Selon un mode de réalisation avantageux de l'invention, on détermine, à chaque itération, une variation élémentaire dudit volume correspondant à un champ de vecteurs $\delta \vec{M}'$. La surface étant paramétrée par u et v, de façon qu'un vecteur $\delta\vec{M}'$ s'exprime sous la forme $\delta\vec{M}'$ (u, v), ladite variation élémentaire est assimilée au parallélépipède généré par l'évolution de l'élément de surface dudv dans la direction $\delta\vec{M}'$ (u, v).

Cette variation élémentaire de volume entre M et M' peut avantageusement s'écrire :

$$\delta d(M,M',\delta\vec{M}') = -\int\int_{u,v} \eta(u,v)\vec{n}(u,v)\delta\vec{M}'(u,v)d\sigma(u,v)$$

avec: $\eta(u,v)=\eta(M,M',\vec{n}(u,v)) = 1$ si la normale unitaire $\vec{n}(u,v)$ est orientée vers le volume intérieur, et -1 sinon.

Selon un mode de réalisation préférentiel de l'invention, ledit maillage simplifié est paramétré à l'aide d'un modèle d'éléments finis. Lesdits éléments finis sont avantageusement obtenus à l'aide d'un interpolateur affine.

Dans ce cas, ledit maillage simplifié peut s'écrire :

$$M(u,v) = \sum_{i=1}^{N} X_i \lambda_i(u,v)$$

avec        $\lambda_i(u,v)$ une fonction de forme adaptée à un modèle d'éléments finis triangulaires,
et        $X_i$ sommet dudit maillage, défini dans $R^3$,
et on définit une fonction de forme sur le maillage par le biais de coordonnées barycentriques.

En utilisant l'expression précédente, on obtient :

$$\delta d(M, M', \delta X_1, \dots, \delta X_n) = -\int\int_{u,v} \eta(u,v)\vec{n}(u,v) \sum_{i=1}^{N} \delta X_i \lambda_i(u,v)d\sigma(u,v)$$

$$= -\sum_{i=1}^{N}\int\int_{u,v} \eta(u,v)\vec{n}(u,v)\delta X_i \lambda_i(u,v)d\sigma(u,v)$$

.

De façon avantageuse, la position d'un sommet $X_i$ à la $k^{ième}$ itération s'écrit :

$$X_i^{k+1} = X_i^k - \gamma_k \frac{\partial \delta d}{\partial X_i}$$

avec la dérivée partielle de la distance pour un sommet $X_i$ :

$$\frac{\partial \delta d}{\partial X_i} = -\int\int_{u,v \in Supp(\lambda_i)} \eta(u,v)\vec{n}(u,v)\lambda_i(u,v)d\sigma(u,v)$$

Avantageusement, le procédé de l'invention met en oeuvre un codage progressif dudit maillage simplifié, par décimation et optimisation locale. Ainsi, ledit maillage simplifié est, de façon avantageuse, représenté par un maillage de base et une séquence de raffinements dudit maillage de base.

De façon avantageuse, le calcul du gradient à la $k^{ième}$ itération comprend les étapes suivantes :

- discrétisation de l'expression de la dérivée partielle de la distance pour chaque sommet $X_i$, sous la forme :

$$\frac{\partial \delta d}{\partial X_i} = -\sum_{\tau \in S}\sum_{i_\tau=1}^{N_\tau}\sum_{j_\tau=1}^{M_\tau} \eta(i_\tau, j_\tau)\vec{n}(i_\tau, j_\tau)\lambda_i(i_\tau, j_\tau)d\sigma(i_\tau, j_\tau)$$

avec :

- S l'ensemble des triangles voisins du sommet $X_i$;
- $N_\tau$ le nombre de points échantillonnés dans la direction de u ;
- $M_\tau$ le nombre de points échantillonnés dans la direction de v ;
- calcul de l'orientation des surfaces, par identification de la plus proche intersection avec le maillage source M.

Selon un aspect préférentiel de l'invention, l'orientation relative des surfaces audit maillage source et dudit maillage simplifié est calculée selon l'équation :

$$\eta(u,v) = -<\vec{n}_{M'}, \vec{n}_M> . <\vec{n}_{M'}, \overline{X_j X_M}>$$

avec :

| | |
|---|---|
| $X_j$ | le point échantillonné sur M' ; |
| $X_M$ | le point d'intersection de la droite passant par $X_j$ et de direction $\vec{n}$ avec le maillage source M ; |
| $\vec{n}_M$ | la normale au maillage source M au point $X_M$ ; |
| $\vec{n}_{M'}$ | la normale au maillage source M' au point $X_j$ ; |
| $\overline{X_j X_M}$ | (représente un vecteur). |

Selon un autre aspect avantageux de l'invention, le procédé comprend une étape de limitation de la dégradation due à une transformation élémentaire, mettant en oeuvre une queue de priorité sur les transformations élémentaires.

Préférentiellement, ladite étape de limitation de la dégradation due à une transformation élémentaire comprend les étapes de :

- calcul d'un coût pour chaque transformation élémentaire possible ;
- réalisation de la transformation élémentaire de moindre coût ;
- recalcul des coûts des transformations élémentaires modifiées par la transformation élémentaire précédente ;
- ajout des nouvelles transformations élémentaires créées et calcul des coûts correspondants.

Le coût d'une transformation élémentaire ($T_i$) peut par exemple s'exprimer par:

$$C(T_i(X_i,X_j)) = \max d_2 (V_M, F(X_i^f))$$

avec :

$T_i$      transformation fusionnant deux sommets $X_i$ et $X_j$ dudit maillage simplifié M' ;

$X_i^f$      le sommet dudit maillage simplifié M' résultant de ladite transformation ;

$F(X_i^f)$      les faces dudit maillage simplifié M' avoisinant le sommet $X_i^f$ après ladite transformation ;

$V_M$      ensemble des sommets dudit maillage source M appartenant aux faces ayant été intersectées lors du calcul de l'orientation des surfaces pendant ladite minimisation.

Le procédé de l'invention peut s'appliquer à de très nombreux domaines techniques, et en particulier à au moins un des domaines appartenant au groupe comprenant :

- la réalité virtuelle ;
- la simulation scientifique ;
- la modélisation.

*5. liste des figures*

D'autres caractéristiques et avantages de l'invention apparaîtront plus clairement à la lecture de la description suivante d'un mode de réalisation préférentiel de l'invention, donnée à titre de simples exemples illustratifs et non limitatifs, et des dessins annexés parmi lesquels :

- la figure 1 illustre le principe d'une fusion d'arête ;
- la figure 2 illustre le principe de la queue de priorité combinant la courbure et la dynamique géométrique définies localement, selon l'invention ;
- la figure 3 illustre le dénombrage des arêtes vives autour d'un sommet du maillage ;
- la figure 4 présente le principe de la pseudo optimisation entre fusion d'arêtes, selon l'invention.
- la figure 5 illustre le principe, consistant à minimiser le volume entre deux surfaces ;
- les figures 6 à 11 sont discutées en annexe 2, décrivant les aspects mathématiques de l'invention, et illustrent respectivement :

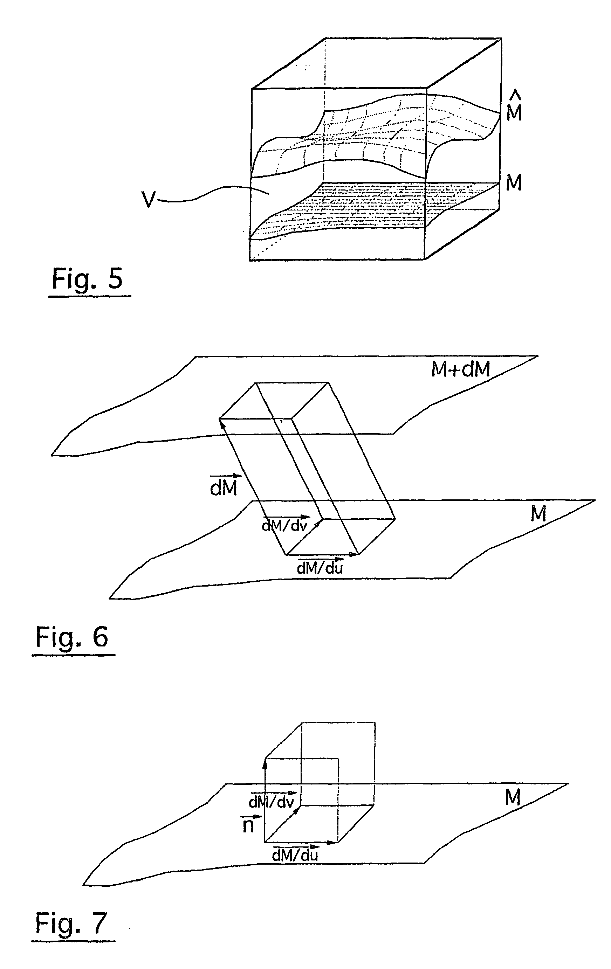

  - figure 6 : variation élémentaire du maillage ;
  - figure 7 : variation élémentaire du maillage dans la direction de la normale ;

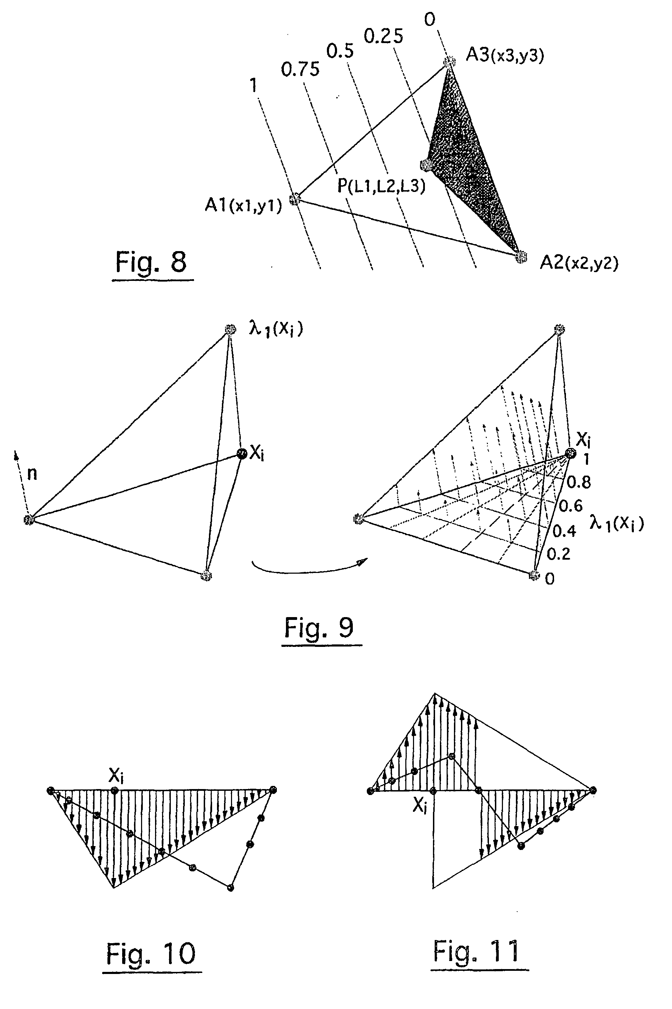

  - figure 8 : système de coordonnées sur un triangle ;
  - figure 9 : fonction de forme ;
  - figures 10 et 11 : exemples d'évolutions de surface sur deux courbes en deux dimensions ;

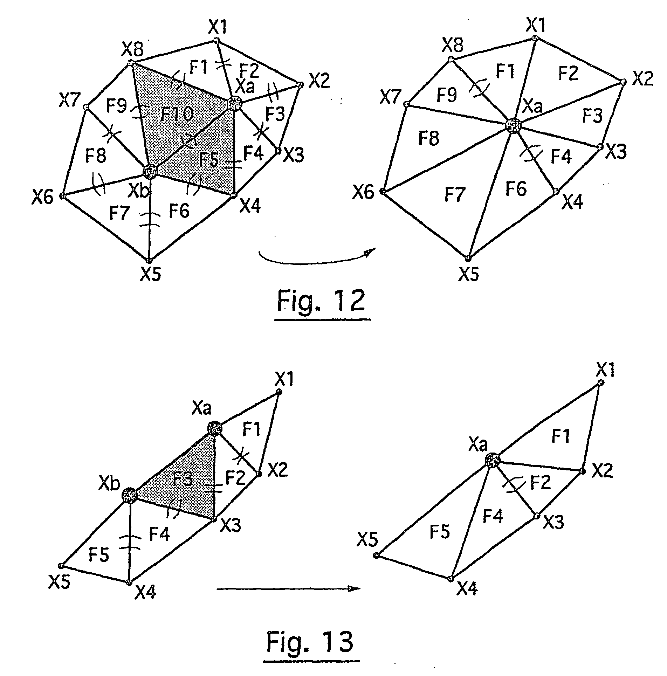

- la figure 12 illustre la mise à jour des adjacences de face après fusion d'une arête adjacente à deux faces ;
- la figure 13 illustre la mise à jour des adjacences de face après fusion d'une arête adjacente à une face ;

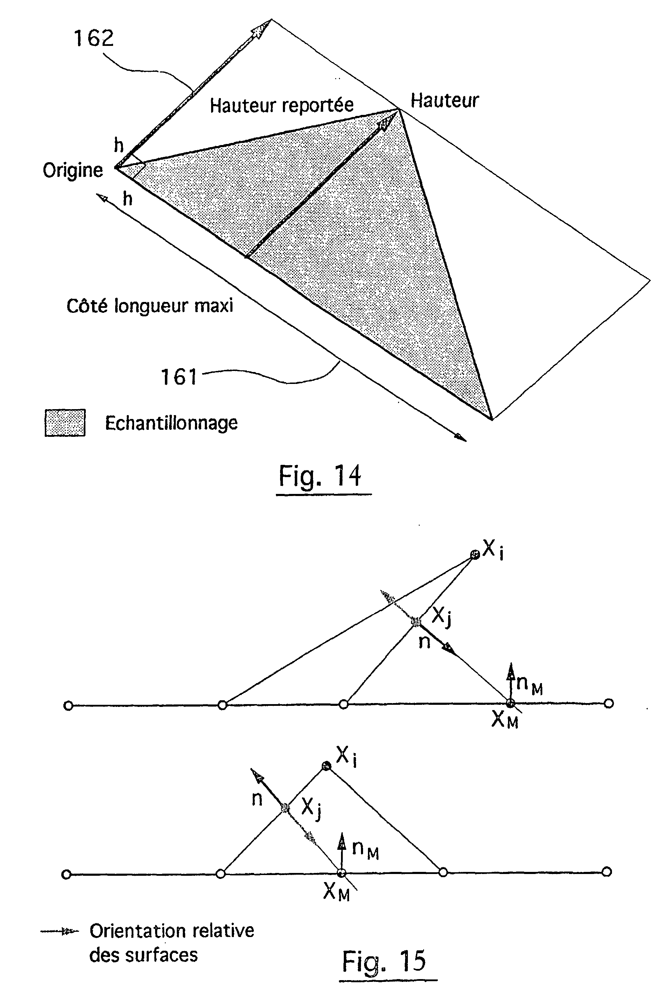

- la figure 14 illustre l'échantillonnage sur un triangle pour l'intégration numérique ;

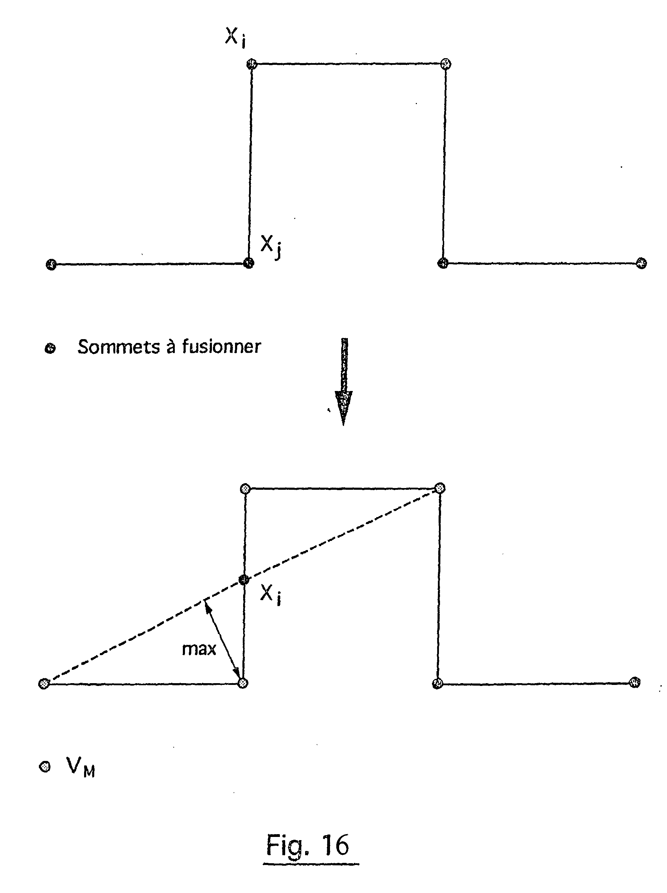

- la figure 15 explique le principe de l'orientation relative des surfaces, de façon à éviter la formation de plis sur la surface lorsque la position initiale est trop éloignée de l'optimum ;
- la figure 16 illustre le coût d'une transformation élémentaire ;

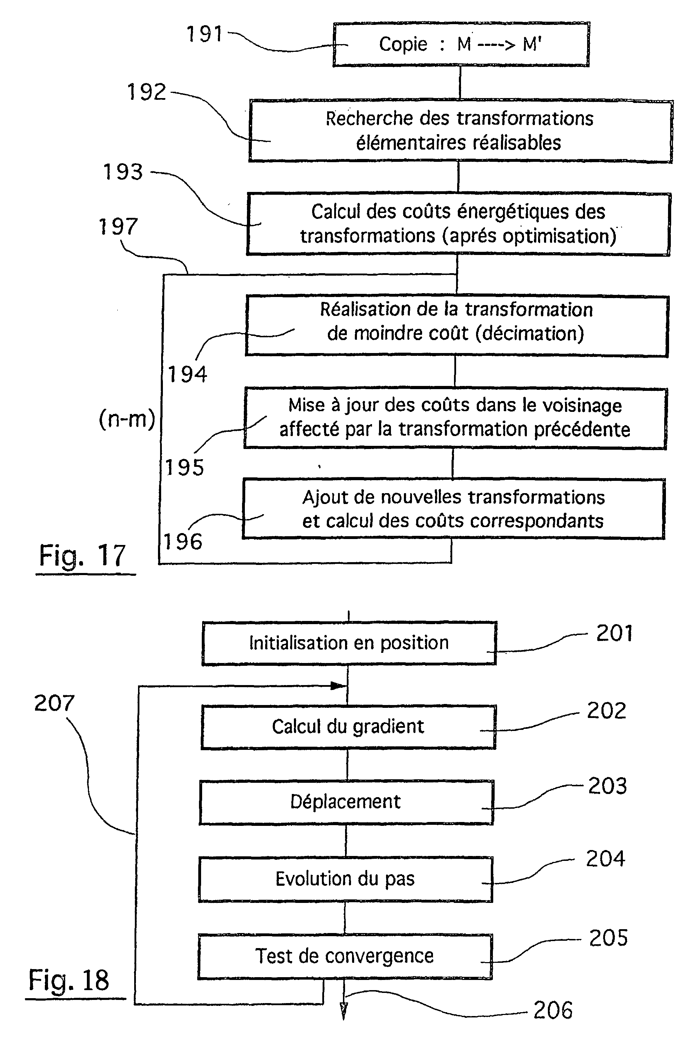

- la figure 17 est un synoptique de l'approximation de maillages selon l'invention ;
- la figure 18 est un synoptique de l'optimisation d'un sommet Xi ;

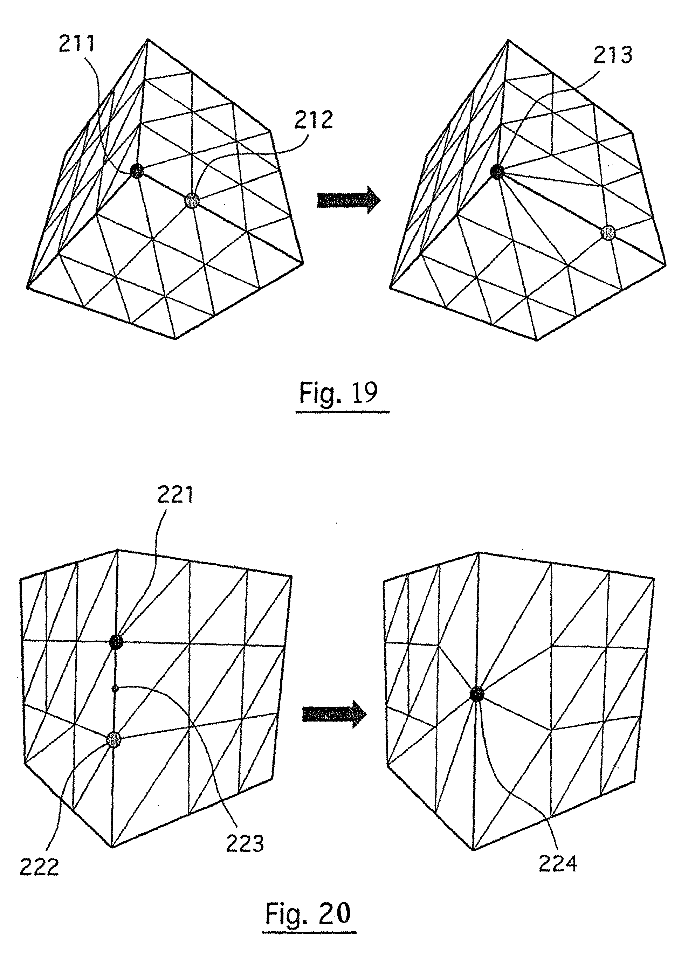

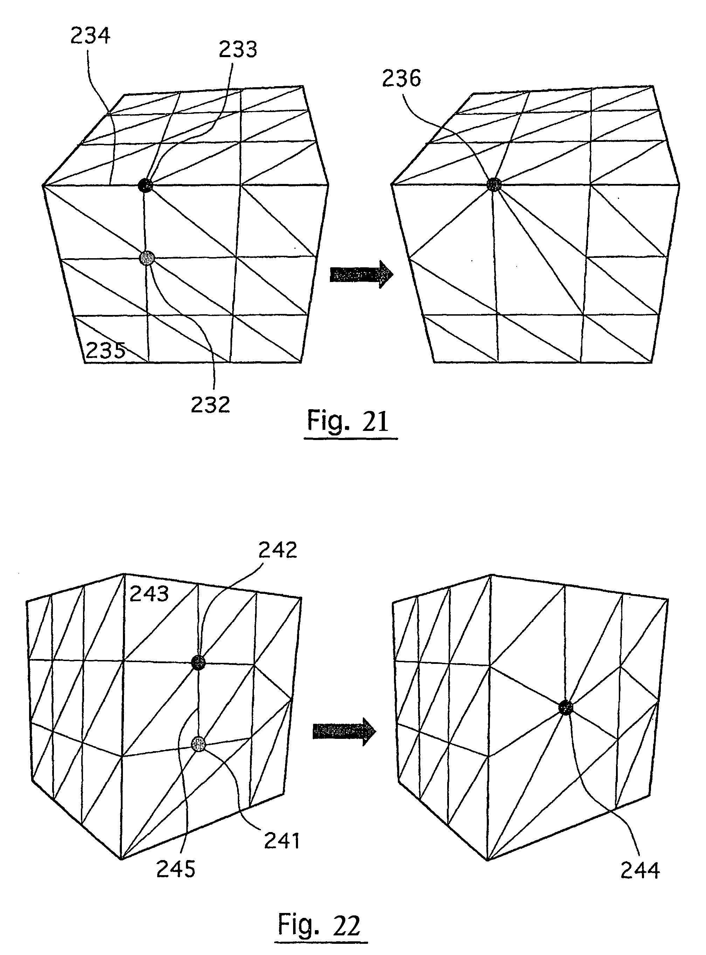

- les figures 19 à 22 illustrent le comportement du procédé de l'invention, sur un parallélépipède rectangle, après décimation sur un coin (figure 19), une arête vive régulière (figures 20 et 21) et un plan (figure 22) ;

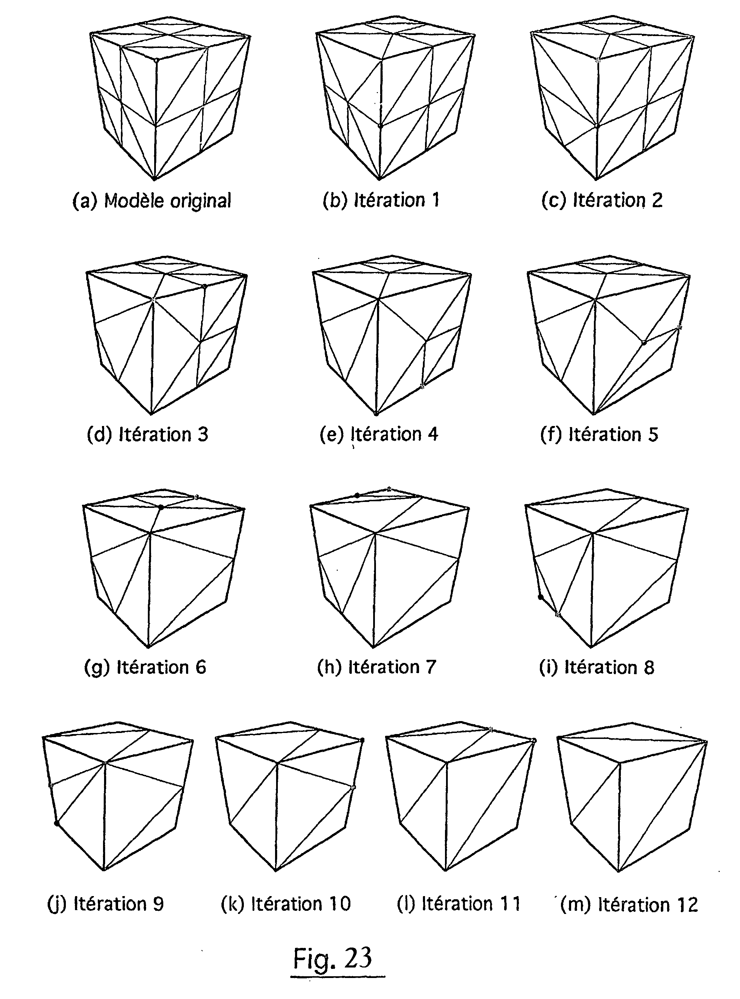

- la figure 23 illustre les différentes (12) itérations effectuées sur un exemple simple, selon l'invention ;
- les figures 24 à 27 sont discutées en annexe 1, présentant la technique connue du codage progressif de maillages, et illustrent respectivement :

- figure 24 (également commentée par la suite) : transformation élémentaire (fusion d'arête) ;
- figure 25 : solutions initiales ;
- figure 26 : mise à jour des transformations dans le voisinage affecté par la dernière modification ;
- figure 27 : ajout des transformations nouvellement créées.

*6. principe général d'une mise en oeuvre de l'invention*

*6.0 Introduction*

Selon l'aspect principal de l'invention, on prévoit une étape d'optimisation de la position des sommets (§ 6.2), qui s'inscrit dans le cadre d'une fusion d'arête, choisie par exemple selon la technique décrite au § 6.1. Cela peut ensuite être mis en oeuvre dans le cadre des procédés des § 6.3 et 6.4.

*6.1. Simplification géométrique*

Ainsi qu'indiqué précédemment, l'invention concerne notamment une nouvelle technique de simplification d'un maillage 3D, reposant sur la mise en oeuvre d'une queue de priorité combinant la courbure locale et la dynamique géométrique locale. Cette technique présente notamment l'avantage de conserver jusqu'à un niveau élevé de décimation, les singularités sur les maillages. Elle possède de plus une vitesse d'exécution intéressante.

Selon un aspect de l'invention, on construit une queue de priorité gérant l'opérateur topologique de fusion d'arêtes. Cette queue de priorité combine les critères de courbure locale et de dynamique géométrique locale, afin d'exploiter au mieux le degré de liberté donné par l'ordre des transformations à réaliser sur le maillage.

La simplification d'un maillage M consiste à construire un maillage M' de complexité géométrique réduite, qui conserve une faible déviation géométrique avec M.

L'algorithme de simplification géométrique doit permettre de spécifier une résolution géométrique au sommet prêt. Pour cela, on choisi un opérateur topologique élémentaire de simplification présentant de bonnes propriétés : conservation de la topologie dans une certaine mesure de décimation, et absence de création de trous sur les surfaces, et conservation des orientations.

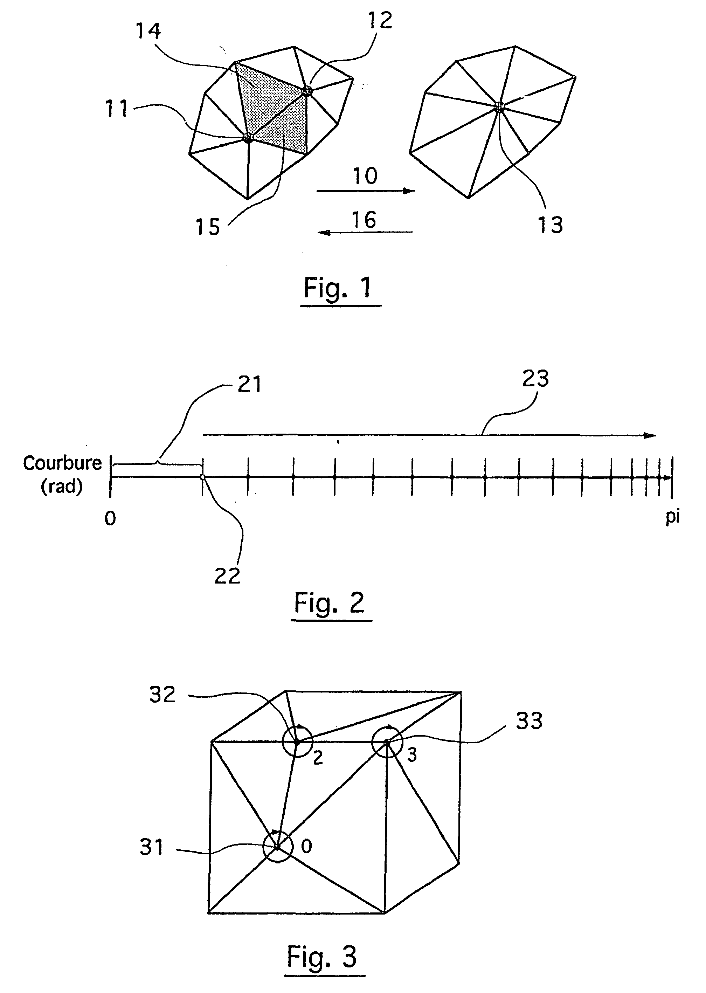

Cet opérateur topologique élémentaire est la fusion d'arêtes, tel que défini par exemple par HOPPE (document déjà cité) qui est illustré en figure 1.

La fusion d'arêtes 10 consiste à fusionner les deux sommets adjacents 11 et 12 en un sommet 13, à supprimer les deux faces 14 et 15 et à positionner le sommet 13 résultant de la fusion. On notera que cette transformation est réversible (possibilité d'insertion 16 d'un sommet).

Chaque transformation élémentaire décime le maillage approximant M'. La qualité de l'approximation se dégrade donc au cours de la décimation, ou reste au mieux invariante. Afin de limiter les dégradations apportées au maillage, on souhaite bien sûr effectuer tout d'abord les transformations affectant le moins possible le modèle.

Pour cela, on définit une queue de priorité contenant toutes les transformations réalisables sur le maillage (soit approximativement le nombre d'arêtes). Durant la décimation, la transformation de moindre coût de la queue de priorité est réalisée, puis supprimée de la queue. Le coût dans le voisinage modifié par l'opération précédente est alors recalculé, et les nouvelles transformations potentielles sur le maillage sont insérées dans la queue de priorité, après en avoir calculé le coût.

Les singularités géométriques, qui sont des parties très informatives, doivent être conservées le plus longtemps possible pendant la décimation. En particulier, les régions de forte courbure apparaissent comme très informatives. En conséquence, le premier critère de tri sur les transformations élémentaires est donc lié à la courbure locale autour de l'arête à fusionner.

On appelle courbure $C(X_i)$ autour d'un sommet $X_i$ l'angle maximal entre les normales à deux faces adjacentes autour du sommet $X_i$. On appelle ensuite courbure autour d'une arête (repérée par deux sommets $X_i$ et $X_j$) la moyenne de ces critères évaluée en chaque sommet.

Un second critère basé sur la longueur de l'arête à fusionner, permettant de réduire la densité géométrique du maillage et d'obtenir un bon rapport d'aspect sur les triangles résultants, est mis en oeuvre.

On peut également utiliser une formule usuelle représentative de la compacité. Cependant, la longueur de l'arête à fusionner présente les avantages :

- de fournir un maillage de densité uniforme dans les régions de courbure voisine ;
- de conserver une bonne compacité des triangles, puisque ce critère tend à créer des triangles équilatéraux ;
- de présenter un faible coût de calcul.

En d'autres termes, la queue de priorité selon l'invention repose simultanément sur la prise en compte des deux aspects suivants :

- un petit triangle n'est intéressant que dans une région hautement informative (soit une région de forte courbure) ;
- il est souhaitable de réduire la densité d'un maillage afin d'en réduire sa complexité.

Les deux critères pris en compte selon l'invention sont combinés de manière à obtenir le comportement illustré par la figure 2. Cette figure est une échelle de la courbure, graduée de 0 à $\pi$, en radians.

Sur les régions de faible courbure 21, inférieures au premier seuil 22, la densité est réduite, et la compacité obtenue est raisonnable, puisque les arêtes de longueur minimale sont fusionnées.

Le seuil définissant une faible courbure est ensuite augmenté (23), lorsqu'il n'y a plus de transformation possible sur le segment de faible courbure 21.

Ainsi, sur les niveaux de décimation les plus faibles, la contrainte de courbure est automatiquement relâchée, afin d'atteindre la complexité géométrique fixée.

La queue de priorité possède donc deux niveaux de contrainte, organisés suivant une hiérarchie : la courbure en est le critère prioritaire, et la densité en est le critère secondaire.

*6.2 Pseudo-optimisation*

Après une opération de fusion d'arêtes, on s'autorise, selon l'aspect essentiel de l'invention, à placer le sommet résultant de la fusion sur la position de l'optimum probable.

Pour cela, on introduit la notion d'arête vive : une arête est vive lorsque l'angle formé par les normales aux deux faces adjacentes est supérieur à un seuil fixé paramétrable. On dénombre ensuite le nombre d'arêtes vives autour des sommets de l'arête à fusionner, ainsi que cela est illustré en figure 3. Le sommet 31 n'est associé à aucune arête vive, le sommet 32 à deux arêtes vives et le sommet 33 à trois arêtes vives.

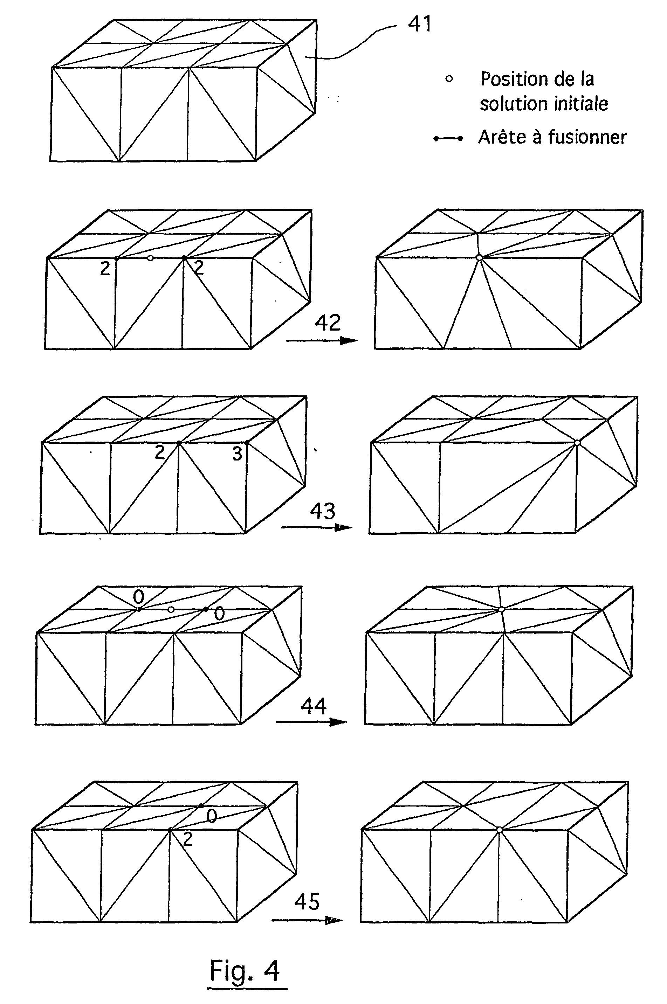

On déduit de ce dénombrement deux cas pour l'initialisation, ainsi que cela est illustré en figure 4 :

- si les nombres d'arêtes vives autour de $X_a$ et autour de $X_b$ sont identiques, on effectue l'initialisation au milieu du segment formant l'arête à fusionner. Sur les zones planes de faible courbure, cela permet de conserver une bonne compacité sur les triangles voisins. Sur une arête vive régulière (nombres d'arêtes vives égaux à 2), cela permet de positionner le sommet proche de l'arête vive qui sera conservé au cours de l'optimisation ;
- si les nombres d'arêtes vives autour de $X_a$ et autour $X_b$ sont différents, l'initialisation est effectuée sur le sommet présentant le plus grand nombre d'arêtes vives. Dans les cas les plus courants, l'optimum est atteint à partir de cette position initiale.

Dans l'exemple de la figure 4, dans lequel le maillage source correspond à un parallélépipède 41, on constate que cette heuristique place le sommet :

- sur le coin du parallélépipède lorsque l'arête à fusionner forme un coin 43 ;
- et sur l'arête vive régulière du parallélépipède lorsque l'arête commence sur la région plane et se termine sur l'arête vive 45.

Les situations où le nombre d'arêtes vives est le même autour des deux sommets sont illustrés en 42 et 44.

*6.3 Applications*

Comme indiqué précédemment, la technique de simplification de l'invention peut être mise en oeuvre seule, pour offrir *une* technique d'approximation de maillage, ou comme une étape d'initialisation d'une procédure plus complète d'optimisation géométrique, telle que par exemple celle décrite ci-après.

*6.3.1 structure*

L'invention peut être mis en oeuvre dans une méthode d'approximation de maillage mettant en oeuvre une métrique basée volume. Un des avantages de cette métrique est qu'elle prend naturellement en compte les caractéristiques importantes à conserver (les singularités), sans devoir recourir à la détection de cas particuliers.

D'une façon générale, l'approximation de maillages génère un modèle polygonal géométriquement plus simple que le modèle original. Le nombre de polygones nécessaire à la représentation est ainsi réduit, tout en conservant la meilleure approximation, au sens perceptuel, du modèle original.

Le problème correspondant peut être formulé par une approche variationnelle permettant d'approximer un maillage M par un maillage M' (ou M) comprenant un nombre réduit de triangles. Elle autorise le déplacement des sommets en optimisant leurs positions au sens d'un ou plusieurs critères définis par le biais d'une fonctionnelle d'énergie à minimiser.

L'approximation d'un maillage génère un modèle géométriquement plus simple que le modèle original. Le nombre de polygones nécessaires à la représentation est ainsi réduit tout en conservant la meilleure approximation (au sens perceptuel) du modèle original. La qualité de l'approximation définit le niveau de ressemblance perceptuelle pour une complexité géométrique fixée. L'invention utilise une métrique basée volume entre "le maillage approximant" et le "maillage approximé".

Le principe de l'algorithme est scindé en deux parties : la décimation et l'optimisation des positions.

L'opération élémentaire de décimation choisie est la fusion d'arête, décrite précédemment. L'algorithme d'optimisation choisi est un algorithme itératif de gradient à pas adaptatif afin de minimiser itérativement le volume compris entre le modèle et le maillage original.

En combinant décimation et optimisation, on peut générer soit un maillage sous forme progressive, soit des niveaux de résolution distincts.

### 6.3.2 *décimation*

Afin de simplifier la géométrie d'un maillage, il convient de décimer itérativement le maillage tout en conservant une bonne topologie. On choisit donc une transformation élémentaire : la fusion d'arête, qui fusionne deux sommets adjacents en un sommet, supprime deux faces et place le nouveau sommet résultant de la fusion, suivant le principe décrit précédemment.

Cette décimation peut être réalisée alternativement ou successivement avec une optimisation (telle que décrite précédemment) des positions d'un ou de plusieurs sommets suivant l'application visée. On peut construire plusieurs niveaux de résolution d'un maillage en utilisant cette transformation élémentaire, et la granularité minimale est obtenue par une décimation puisque le maillage est alors défini au sommet près. On procède alors en alternant décimation locale et optimisation locale du sommet résultant de la fusion.

Inversement, on peut définir des niveaux de résolutions de manière générale en décimant au préalable un ensemble de sommets puis en optimisant globalement les positions des sommets du maillage.

La décimation successive permet de construire des maillages progressifs. Dans ce cas, il convient de choisir judicieusement l'ordre de réalisation des transformations. Cet ordre est défini par le biais d'une queue de priorité sur les transformations élémentaires de manière à effectuer en premier les transformations affectant le moins possible le modèle original.

Cela amène à définir la notion de coût pour chaque opération élémentaire et la queue de priorité sera triée par ce dernier. Ainsi initialement, toutes les transformations possibles sont listées, le coût de chacune d'elles est calculé (sans effectuer de modifications sur le maillage), on réalise la transformation de moindre coût, et on recalcule les coûts des transformations élémentaires modifiées par la transformation précédente.

Bien sûr, d'autres techniques que la décimation peuvent être utilisées pour obtenir le maillage approché, ou approximé, tel que des techniques de sous-échantillonnage, de subdivisions adaptatives, etc...

### 6.3.3 optimisation basée sur le volume

Le problème de l'optimisation consiste donc à minimiser une fonctionnelle d'erreur définie par :

$$E(M, M') = d(M, M')$$

où d(M, M') caractérise une distance entre les deux maillages M et M', et garantit la fidélité aux données initiales. L'algorithme d'optimisation est choisi notamment pour ses performances en terme de vitesse et/ou de pertinence de la solution finale.

On explique ci-dessous le contexte théorique de la métrique basée volume utilisée pour caractériser l'erreur d'approximation entre deux maillages, ainsi que la formulation variationnelle permettant l'optimisation de la qualité de l'approximation, selon l'invention.

### 6.3.3.1 métrique

Un exemple de mesure de l'erreur, ou distance, entre les maillages M et M' est illustrée en figure 5. La mesure de l'erreur est donnée par le volume V, compris entre les deux surfaces formées par les maillages M et M'.

Ce volume est défini par l'intégrale de Lebesgue suivante :

$$V(M,M') = \int_{\mathbf{R}^3} I_V(M',M)(\vec{q})d^3\vec{q}$$

avec $I_V(\vec{q})$ la fonction indicatrice de l'intérieur du volume et $\vec{q}$ un point générique de $\mathbf{R}^3$.

*6.3.3.2 fonctionnelle*

Un maillage étant défini partiellement par les positions de ses sommets, on peut formuler le problème de la minimisation du volume par le biais d'une fonctionnelle d'énergie à minimiser, cette fonctionnelle étant définie par :

$$E = E_{error} = d(M, M') = d(M,M',X_1,...,X_n))$$

L'algorithme d'optimisation mis en oeuvre consiste alors à déterminer les positions optimales des sommets $X_1$, $X_2$, ...$X_n$ qui minimisent la distance $d(M',M)$.

*6.3.3.3 variation élémentaire de volume*

L'évolution élémentaire du maillage M' est définie par le champ de vecteurs $\delta \vec{M}'$. Une expression de la variation élémentaire du volume est décrite en annexe 2 (§ 2).

*6.3.3.4 mise en oeuvre du gradient adaptatif*

La technique d'optimisation utilisée pour résoudre le problème de la minimisation peut avantageusement reposer sur une approche itérative, tel que le gradient adaptatif. L'annexe 2 (§ 1) décrit en détail la mise en oeuvre de cette technique du gradient adaptatif, ainsi que le calcul d'une variation élémentaire de volume permettant la détermination du gradient à chaque itération, et le paramétrage du maillage par un modèle d'éléments finis triangulaires.
Un modèle d'éléments finis triangulaires permettant de calculer le gradient en chaque sommet est décrit en annexe 2 (§ 3).
L'algorithme du gradient pour un sommet $X_i$ s'écrit sous la forme :

$$X_i^{k+1} = X_i^k - \gamma_k \frac{\partial \delta d}{\partial X_i}$$

L'expression de la dérivée partielle de la distance pour un sommet $X_i$ est :

$$\frac{\partial \delta d}{\partial X_i} = - \int \int_{u,v \in Supp(\lambda_i)} \eta(u,v)\vec{n}(u,v)\lambda_i(u,v)d\sigma(u,v)$$

Le support de la fonction de forme est défini par les triangles voisins du sommet Xi. L'intégrale est calculée par le biais d'une discrétisation sur les triangles (décrite par la suite) et une heuristique a été adoptée pour déterminer l'orientation relative des surfaces formées par M et M' (également décrite par la suite).
A chaque itération du gradient, on applique un déplacement sur le sommet Xi qui tend à minimiser le volume entre les surfaces. Le déplacement est la somme des contributions liées aux calculs d'orientation en plusieurs points de chaque triangle.
Le pas $\gamma_i$ est adaptatif. Au départ il est initialisé à $\gamma_0$ (une fraction de la longueur de l'arête fusionnée), puis il est multiplié par k (avec k < 1), en présence d'une oscillation (c'est-à-dire lorsque deux vecteurs de déplacement successifs sont de directions opposées :

$$<\frac{\partial \delta d^{k+1}}{\partial X_i}, \frac{\partial \delta d^k}{\partial X_i}> < 0).$$

Ce pas $\gamma_i$ est borné (borne inférieure $\gamma_{min}$), afin de conserver la convergence de l'algorithme. On a $\gamma_i$ ]$\delta$, 2$\lambda_0$-$\delta$], avec $0 < \delta < \lambda_0$ et $\|HE(\lambda)\| \leq 1/\lambda_0$ (où HE représente le Hessien de E).

On considère la convergence atteinte lorsque le déplacement du sommet $X_i$ d'une itération à l'autre est inférieure à $\varepsilon$ ($\varepsilon$ étant une fraction de la dynamique locale des arêtes du maillage). Le nombre d'itérations de l'algorithme peut également être borné.

### 6.3.4. description d'un mode de réalisation détaillé

Le procédé de l'invention permettant de générer des approximations de maillages à différents niveaux de résolution, un codage progressif de maillages par décimation et optimisation locale peut être mis en oeuvre.

Dans cette optique, on définit une transformation élémentaire de décimation adaptée au codage progressif, une méthode d'optimisation locale et une queue de priorité sur les transformations afin de maximiser le ratio quantité d'informations/qualité visuelle à chaque itération de l'algorithme. On décrit par la suite la mise en oeuvre de cet algorithme, et notamment le calcul du gradient défini sur un sommet du maillage.

### 6.3.4.1 transformation élémentaire

Le codage progressif permet de définir la notion d'échelonnabilité sur un maillage. L'échelonnabilité maximale est obtenue lorsque la résolution du maillage peut être choisi au sommet près. Un maillage peut ainsi être codé sous la forme d'un maillage de base (à une résolution visuellement acceptable) et d'une séquence de raffinements.

Afin d'obtenir une telle structure de données, il convient de décimer itérativement le maillage, d'optimiser localement les positions des sommets de manière à approximer localement au mieux le maillage initial, et d'enregistrer simultanément la séquence de décimation afin de coder le maillage dans le sens des raffinements.

On choisit donc une transformation élémentaire réversible, par exemple la fusion d'arêtes définie par HOPPE (document déjà cité), qui est illustrée en figure 1. La fusion d'arête 10 consiste à fusionner les deux sommets adjacents 11 et 12 en un sommet 13, à supprimer les deux faces 14 et 15 et à optimiser la position du sommet 13 résultant de la fusion.

Cette transformation est réversible (insertion 16 d'un sommet).

Après transformation, les adjacences doivent être mises à jour. Pour cela, on considère une structure de type faces/sommets et une adjacence définissant toute les relations entre les éléments. Les faces stockent des liens vers leurs faces voisines, et chaque sommet liste les faces qui le contiennent et les sommets voisins. Les figures 12 et 13 illustrent la mise à jour des adjacences de faces après fusion d'une arête adjacente à deux faces (figure 12) ou à une face (figure 13).

La décimation est ainsi naturellement prise en compte sur toutes les zones du maillage, sans qu'il soit nécessaire de détecter les cas particuliers, telles que les arêtes adjacentes à une seule face.

### 6.3.4.2 initialisation

L'optimisation agit sur la position du sommet résultant de la fusion de l'arête formée par les sommets $X_a$ et $X_b$. Afin de débuter l'algorithme d'optimisation avec une bonne condition initiale, on choisit de positionner le sommet le plus proche de l'optimum probable. Pour cela, on introduit la notion d'arête vive : une arête est vive lorsque l'angle formé par les normales aux deux faces adjacentes est supérieur à un seuil fixé paramétrable. On dénombre ensuite le nombre d'arêtes vives autour des sommets de l'arête à fusionner, selon l'approche déjà discutée.

### 6.3.4.3 optimisation

On rappelle que l'expression de la fonctionnelle considérée :

$$E = E_{error} = d(M, M')$$

Cette fonctionnelle est minimisée en optimisant la position du sommet $X_i$ par un algorithme de gradient :

$$X_i^{k+1} = X_i^k - \gamma_i \frac{\partial \delta d^k}{\partial X_i}$$

Les déterminations du pas $\gamma_i$ et des critères d'arrêt sont discutées au §-6.3.3.4.

*6.3.4.4 discrétisation*

Le calcul du gradient nécessite donc une discrétisation de l'intégrale :

$$\frac{\partial \delta d}{\partial X_i} = -\int \int_{u,v \in Supp(\lambda_i)} \eta(u,v)\vec{n}(u,v)\lambda_i(u,v)d\sigma(u,v)$$

Sur le support de la fonction de forme définie sur $X_i$.

On est donc amené à échantillonner la surface des triangles, avant d'évaluer en chaque point X(x,y,z) la valeur de la fonction de forme $\lambda_i(x, y, z)$ et l'orientation des surfaces $\eta(u,v)$.

Le gradient s'exprime donc sous la forme discrète suivante :

$$\frac{\partial \delta d}{\partial X_i} = -\sum_{\tau \in S} \sum_{i_\tau=1}^{N_\tau} \sum_{j_\tau=1}^{M_\tau} \eta(i_\tau,j_\tau)\bar{n}(i_\tau,j_\tau)\lambda_i(i_\tau,j_\tau)d\sigma(i_\tau,j_\tau)$$

avec :

- S l'ensemble des triangles voisins du sommet $X_i$ ;
- $N_\tau$ le nombre de points échantillonnés dans la direction de u ;
- $M_\tau$ le nombre de points échantillonnés dans la direction de v.

Pour un triangle donné, l'échantillonnage est effectué dans le plan passant par ses sommets, le nombre de points étant proportionnel à la surface du triangle, ainsi que cela est illustré en figure 14.

Le repère d'échantillonnage est formé par l'arête 161 de plus grande longueur et la hauteur 162 du triangle courant. Soit n le nombre minimum de points par triangles fixés à l'avance, $S_{min}$ l'aire minimale des triangles voisins de $X_i$ et h le pas d'échantillonnage. On déduit h par la formule suivante :

$$n \times h^2 = S_{min}$$

La fonction de forme est évaluée par un rapport de surfaces tel que décrit en annexe 2.

*6.3.4.5 orientation des surfaces*

L'orientation relative de deux surfaces définie en trois dimensions est délicate à définir avec exactitude. On utilise avantageusement une heuristique pour calculer l'orientation des deux surfaces M et M' (c'est-à-dire le terme $\eta$ (u,v) de l'équation du gradient présenté ci-dessus) :

$$\eta(u,v) = -<\vec{n}_{M'},\vec{n}_M>.<\vec{n}_{M'}, \overline{X_jX_M}>$$

avec :

$X_j$     le point échantillonné sur M' ;
$X_M$     le point d'intersection de la droite passant par $X_j$ et de direction $\vec{n}_{M'}$ avec le maillage source M ;
$\vec{n}_M$     la normale au maillage source M au point $X_M$ ;
$\vec{n}_{M'}$     la normale au maillage source M' au point $X_j$.

où     <,> représente le produit scalaire.

La figure 15 illustre ce calcul de l'orientation en deux dimensions. En trois dimensions, il suffit de remplacer les segments par des triangles. Cette heuristique limite fortement la formation de plis sur la surface, puisque le terme $<\vec{n}_{M'},\vec{n}_M>$ traduit l'opposition des normales lorsqu'elles sont de sens opposés.

### 6.3.4.6 priorités sur les transformations

Chaque transformation élémentaire décime le maillage approximant M'. La qualité de l'approximation se dégrade donc au cours de la décimation, ou reste au mieux invariante lorsque le volume reste inchangé, et ce malgré l'optimisation des points.

Par exemple, si l'on considère une sphère, on sait qu'elle nécessite en théorie une infinité de triangles pour être parfaitement modélisée. Dès lors que l'on restreint le nombre de triangles, on dégrade la qualité de son approximation. En revanche, sur des régions planes d'un objet, on peut décimer jusqu'à l'obtention d'un maillage optimal (ainsi, sur un parallélépipède, l'optimum est atteint lorsque chaque face est décrite par deux triangles).

On souhaite coder progressivement les maillages, et donc retirer itérativement les sommets par une opération de fusion d'arêtes. Après l'optimisation des positions, un autre processus est donc développé, consistant à définir une priorité sur les transformations élémentaires, de manière à effectuer en premier les transformations affectant le moins possible le modèle.

Pour cela, on définit la notion de coût pour chaque opération élémentaire, et une queue de priorité triée selon ce coût.

Ainsi, initialement, toutes les transformations possibles sont listées puis le coût de chacune d'elles est calculé (sans effectuer les modifications correspondantes sur le maillage). On réalise la transformation de moindre coût, puis on recalcule les coûts des transformations élémentaires modifiées par la transformation précédente. On rappelle que la fusion d'arête supprime deux faces soit en conséquence, les transformations concernant ces faces sont retirées de la queue de priorité, ce qui créé une ou deux nouvelles transformations, pour lesquelles on calcule également le coût en énergie, déduit de la technique décrite en annexe 2, et qui représente la variation de volume entre le maillage avant et après transformation.

Le calcul direct du volume entre deux surfaces triangulées étant complexe à calculer, on fait appel à une heuristique permettant de simplifier ce problème.

Soient :

- $T_i$ la transformation fusionnante de sommet $X_i$ et $X_j$ de M' ;
- $X_i^f$ le sommet de M' résultant de la fusion (dont on a optimisé la position) ;
- $F(X_i^f)$ les faces de M' avoisinant le sommet $X_i^f$ après transformation ;
- $V_M$ l'ensemble des sommets de M appartenant aux faces ayant été intersectées lors du calcul de l'orientation des surfaces pendant l'optimisation.

Le coût d'une transformation élémentaire $T_i$ s'exprime alors sous la forme:

$$C(T_i(X_i,X_j)) = \max d_2(V_M,F(X_i^f))$$

Ce coût correspond donc à la distance maximale des sommets du maillage original (sous les faces avoisinant le sommet $X_i$) aux faces avoisinant $X_i$ après transformation. La figure 16 illustre, en deux dimensions, l'expression du coût dans le cas d'une décimation sur une discontinuité. Comme indiqué précédemment, en trois dimensions les segments sont remplacés par des triangles. La transformation 181 consiste à fusionner les sommets $X_i$ et $X_j$ en un sommet $X_i'$. Les sommets $182_1$ à $182_4$ correspondent à l'ensemble $V_M$.

On peut constater que sur un plan maillé, le coût d'une transformation serait nul, les zones comportant une information redondante étant décimées en priorité.

On présente maintenant des exemples de synoptique pour la mise en oeuvre des différents aspects discutés précédemment.

### 6.3.4.7 synoptiques

• approximation de maillages

La figure 18 résume l'algorithme d'approximation d'un maillage M comportant n faces par un maillage M' comportant m faces (avec bien sûr m < n).

On commence tout d'abord par copier le maillage source M, ou maillage original, dans la variable M', représentant le maillage simplifié que l'on cherche à déterminer (191). Sur ce maillage M', on effectue ensuite une recherche de toutes les transformations élémentaires réalisables (192), puis un calcul (193) des coûts énergétiques de ces transformations après optimisation.

On sélectionne et on réalise (194) la transformation de moindre coût parmi l'ensemble des transformations possibles. Il s'agit de l'étape de décimation.

Puis, on met à jour (195) les coûts énergétiques des transformations, dans le voisinage affecté par la transformation effectuée à l'étape 194. Enfin, on ajoute (196) les nouvelles transformations induites par la transformation effectuée 194, et on calcule les coûts correspondants.

Les trois étapes 194, 195 et 196 sont réitérées (197) n - m fois, jusqu'à ce qu'au moins un des critères d'arrêt soit atteint.

• *optimisation en position*

La figure 20 illustre l'optimisation du sommet $X_i$, après fusion de l'arête $(X_i, X_j)$.

On définit au préalable les paramètres d'initialisation suivants, partiellement en fonction de la dynamique de la géométrie locale autour du sommet $X_i$ :

- Epsilon est un critère d'arrêt de la convergence, fraction de la longueur moyenne des arêtes autour du sommet $X_i$ (typiquement 0,001) ;
- MaxIter est la borne supérieure du nombre d'itérations, fixée arbitrairement (typiquement 200 itérations) ;
- StepInit, StepDec et StepMin sont respectivement la valeur d'initialisation, le taux de décroissance et la borne inférieure du pas. StepInit et StepMin sont des fractions de la longueur de l'arête à fusionner (typiquement 0,1 et 0,01), StepDec est fixé arbitrairement (typiquement 0,95) ;
- StepSampling est le pas d'échantillonnage sur les triangles, utilisé pour le calcul discret de l'intégrale formant le gradient à chaque itération. Il est déduit des aires des faces voisines du sommet X.
- NbSharpEdges(X) est le nombre d'arêtes vives autour du sommet X.

L'algorithme débute par une étape 201 d'initialisation en position, qui consiste à effectuer les opérations suivantes :

Si     (NbSharpEdge($X_i$) = NbSharpEdge($X_j$))
Alors
    initialiser au milieu de l'arête à fusionner,
    sinon
    initialiser sur le sommet du plus grand nombre d'arêtes vives.

On réalise ensuite le calcul 202 du gradient, avec les opérations de discrétisation sur les triangles et d'orientation des surfaces. Puis, on effectue le déplacement 203. Le sommet se déplace de la valeur du vecteur gradient multiplié par le pas courant.

On contrôle ensuite l'évolution 204 du pas. Si une oscillation est détectée avec le vecteur gradient précédent, le pas est multiplié par StepDec. Si le pas est inférieur à StepMin, il est réinitialisé à StepMin.

Enfin, on effectue un test de convergence 205. Si la distance entre la position courante et la position précédente est inférieure à Epsilon, ou si le nombre d'itérations MaxIter est atteint, l'algorithme est arrêté (206). Sinon, on répète (207) les étapes 202 à 205.

## 6.4.3.8 résultats

On montre maintenant, à partir d'un exemple simple (un parallélépipède), le comportement du procédé d'approximation de maillages selon l'invention. L'intérêt du parallélépipède est de permettre de vérifier la qualité de l'approximation sur les discontinuités (arêtes vives régulières et coins) et sur les plans.

Sur un tel objet, l'optimum est atteint lorsque l'on obtient chaque face maillée par deux triangles et que la forme globale de l'objet est parfaitement conservée.

La figure 19 illustre le cas d'une décimation sur un coin 211 du parallélépipède. La solution initiale a été placée sur le coin 211, puisque le nombre d'arêtes vives est maximal en ce sommet (trois autour du coin 211 et deux autour de l'arête vive régulière de l'objet (sommet 212)). L'algorithme d'optimisation oscille, puis converge autour de cette position initiale 213, puisque le pas de gradient a été initialisé à une valeur non nulle, puis a diminué dès que l'oscillation a été détectée.

La figure 20 présente une décimation sur une arête vive régulière. La solution initiale a été placée au milieu de l'arête 223, puisque le nombre d'arêtes vives est identique (deux autour de chaque sommet 221 et 222). Plusieurs solutions situées sur l'arête vive régulière de l'objet satisfont l'invariance de volume, et l'algorithme converge après oscillation autour de l'arête, sur une position dépendante de la solution initiale. Le milieu 224 de l'arête constitue donc une bonne initialisation dans ce cas.

La figure 21 illustre une autre situation de décimation sur une arête vive régulière, dans laquelle la solution initiale a été placée sur l'arête vive 234, puisque les nombres d'arêtes vives sont différents (deux autour du sommet 233 situé sur l'arête, et aucune autour du sommet 232 situé sur la face plane 235 de l'objet). Plusieurs solutions situées sur l'arête vive régulière de l'objet satisfont l'invariance de volume, et l'algorithme converge après oscillation autour de l'arête 234, sur une position 236 dépendant de la solution initiale.

La figure 22 présente le cas d'une décimation sur un plan 243. La solution initiale a été placée au milieu de l'arête 245 formée par les sommets 241 et 242, puisque les nombres d'arêtes vives sont identiques (aucune autour de chaque sommet 241et 242). Plusieurs sommets situés sur le plan de l'objet satisfont l'invariance de volume. L'algorithme converge, après oscillation, de part et d'autre du plan, sur une position dépendant de la solution initiale. Le milieu 244 de l'arête constitue donc, à nouveau une bonne initialisation dans cette situation.

Le procédé décime le maillage initial en utilisant une queue de priorité.

La figure 23 montre les douze itérations successives de l'algorithme, numérotées (b) à ( m), à partir du maillage original numéroté (a).

On constate que les arêtes entraînant une invariance de volume sont décimées en priorité. L'optimum est atteint pour les sommets demandés sur cet objet, puisque chaque face est alors maillée par seulement deux triangles.

On remarque que les arêtes rejoignant deux coins de l'objet ne sont pas fusionnées, puisque cette opération aurait entraîné une forte dégradation de la qualité de l'approximation, les coûts et transformations élémentaires correspondantes étant supérieurs aux coûts d'une fusion d'arêtes sur un plan ou le long d'une arête vive régulière.


**ANNEXE 1**

**Codage progressif de maillages**

Hugues Hoppe a développé une méthode fonctionnant par décimation et optimisation des points. La décimation est réalisée par une transformation élémentaire réversible et facilement codable : la fusion d'arête qui rassemble deux sommets adjacents en un seul sommet, supprime deux faces et optimise ensuite la position du sommet résultant de la fusion (figure **24**).

L'auteur a utilisé une approche variationnelle permettant la minimisation du processus, la fonctionnelle d'énergie associée est définie par un terme d'erreur et un terme de régularisation:

$$E = E_{error} + E_{regul}$$

Ce terme d'erreur caractérise la distance entre les deux maillages $M$ et $\hat{M}$ définie localement, et garantit la fidélité aux données initiales. Le terme de régularisation permet de respecter la topologie d'un maillage et d'assurer l'unicité de la solution. Afin d'initialiser le problème, une fois la face à supprimer déterminée, trois minimisations (partant de trois positions initiales différentes choisies de manière à initialiser correctement le processus d'optimisation) sont réalisées (figure **25**) afin de retenir la solution correspondant au minimum d'énergie de la fonctionnelle.

Chaque transformation $T_i$ supprimant un sommet de la triangulation et modifiant le maillage $M_i$ en $M_{i+1}$, engendre une augmentation de l'énergie globale qui peut être calculée. Le coût en énergie résultant de cette décimation est le suivant :

$$\begin{cases} \Delta E_{T_i} = E_{M_{i+1}} - E_{M_i} \\ \Delta E_{T_i} \geq 0 \end{cases} \tag{1}$$

Au départ toutes les transformations possibles sur le maillage sont listées, puis le coût énergétique pour chacune d'entre elles est calculé. Ces transformations sont rangées dans une queue de priorité triée suivant leur coût estimé. Au cours de l'algorithme, la transformation de coût minimum est effectuée, puis les coûts des transformations dans le voisinage affecté par cette modification sont mis à jour(figure **26**)Les transformations nouvellement créées sont ajoutées et leur coût estimé est calculé (figure **27**) L'algorithme agit donc de manière itérative et décime le maillage $M$ d'un sommet et de deux faces à chaque itération. Cette approche de décimation et d'optimisation est bien adaptée au contexte de codage progressif, puisqu'il suffit d'enregistrer la séquence des décimations dans le sens inverse (celui des raffinements) pour coder un maillage sous une forme progressive. Ainsi un maillage $M$ peut être représenté par un maillage à la résolution $M_0$ et par une séquence de raffinements $\{r_0, r_1, r_2, ..., r_n\}$.

L'erreur utilisée pour caractériser la distance entre les deux maillages est la distance euclidienne (ou quadratique) entre le point $X_i$ à optimiser du maillage $M$ et le maillage $\hat{M}$, qu'il convient de définir. Les points situés à une distance $D$ de $X_i$ dans $\mathbb{R}^3$ forment une sphère de rayon $D$ :

$$d_2(X_i, M) = \min_{Y \in M} d_2(X_i, Y) = \min_{Y \in M} \|X_i - Y\|_2 \qquad (2)$$

où

$$\|X\|_2 = (\sum_{j=1}^{N} X_j^2)^{1/2}, X \in \mathbb{R}^N \qquad (3)$$

Le maillage $M$ étant une surface triangulée, cela engendre une mesure de la distance entre un point $X_i$ et un ensemble de triangles. On remarque d'après la définition de la distance $L^2$ dans $\mathbb{R}^3$ que le point de $M$ situé à la distance minimale de $X_i$ n'est pas toujours unique. Le choix effectif de ce point dépend de l'ordre d'insertion des points et de la nature du test lors de la recherche du minimum (< $ou$ ≤). La métrique $L^2$ appliquée sur les maillages devient la métrique $D^2$ puisque l'on raisonne avec une distance point-surface.

**ANNEXE 2**

**Optimisation**

La technique d'optimisation choisie pour résoudre notre problème de minimisation est une méthode itérative, appelée gradient adaptatif.

**1 Gradient adaptatif**

Notre objectif consiste donc à minimiser la fonctionnelle E décrite précédemment. Comme dans tous les cas, la stationnarité de E est une condition nécessaire d'optimalité, effectivement, pratiquement toutes les méthodes d'optimisation sans contraintes dans $\mathbb{R}^N$ consistent à rechercher un vecteur $X$ stationnaire ($\nabla E(X) = 0$). Ce problème est équivalent à la résolution du système d'équations non linéaires :

$$\frac{\partial E}{\partial X_i}(X) = 0, \ \forall i = 1,..., N \qquad (1)$$

On peut chercher à résoudre directement ce système, ce qui conduit à la méthode de Newton. Cependant, cette méthode peut ne pas converger, si le point de départ des itérations est trop éloigné de $X$. D'autre part, elle suppose la fonction deux fois continûment différentiable, et elle nécessite le calcul des dérivées secondes en chaque point. C'est pourquoi les méthodes les plus couramment utilisées procèdent différemment : il s'agit de procédures itératives où l'on engendre une suite de vecteurs $X^0$, $X^1$,... convergeant vers un optimum local de E.

Ces méthodes de gradient constituent une famille de méthodes qui procèdent de la façon suivante : On part d'un point $X^0$ et on calcule le gradient $\nabla E(X^0)$ en $X^0$ de la fonction E à minimiser. Comme $\nabla E(X^0)$ indique la direction de la plus grande augmentation de E, on se déplace d'une quantité $\gamma_0$ dans la direction opposée au gradient, et on définit le point :

$$X^1 = X^0 - \gamma_0 \times \frac{\nabla E(X^0)}{\|\nabla E(X^0)\|} \qquad (2)$$

La procédure est répétée et engendre les points $X^0$, $X^1$, ..., $X^n$, ... suivant la relation :

$$X^{k+1} = X^k - \gamma_k \times \frac{\nabla E(X^k)}{\|\nabla E(X^k)\|} \qquad (3)$$

Dans cette famille, il convient de signaler les méthodes de gradient à pas déterminé dans lesquelles on choisit à priori les valeurs de déplacements $\gamma_k$. L'inconvénient de cette procédure est que la convergence peut être très lente. Nous avons donc choisi d'utiliser la méthode de gradient à pas adaptatif, qui consiste à diminuer (resp. augmenter) le pas $\gamma_k$ lorsque l'erreur augmente (resp. diminue), tout en conservant la contrainte de contrôle du pas, soit : $\gamma_k \in [\gamma_{min},$

$\gamma_{max}$]. Finalement, comme critère d'arrêt, nous nous sommes fixés que la différence entre deux erreurs successives devait être inférieure à un ε donné.

Au cours de la minimisation, les positions des sommets du maillage vont évoluer de manière à minimiser le volume entre les deux surfaces, cette évolution nécessite de calculer le gradient à l'itération $k$ (le terme $\nabla E(X^k)$ de l'équation

## 2 Variation élémentaire de volume

Le processus d'optimisation est donc vu comme une évolution du maillage $\hat{M}$ de manière à minimiser $V(M, \hat{M})$. L'évolution élémentaire du maillage est définie par le champ de vecteurs $\delta\vec{M}$. En réalisant une paramétrisation de la surface par $u$ et $v$, le vecteur $\delta\vec{M}$ peut s'exprimer sous la forme $\delta\vec{M}(u,v)$. Si on approxime localement la surface par son plan tangent la variation élémentaire de volume est alors le parallépipède généré par l'évolution de l'élément de surface $dudv$ dans la direction $\delta\vec{M}(u,v)$ (figure 6).

On peut ainsi exprimer la variation élémentaire de volume induite par l'élément d'aire $dudv$ :

$$\delta V(M, \hat{M}, \delta\hat{\vec{M}}(\vec{u}, v)) = \left| \left[ \frac{\partial\vec{\hat{M}}(u,v)}{\partial u} \wedge \frac{\partial\vec{\hat{M}}(u,v)}{\partial v} \right] \cdot \delta\vec{\hat{M}}(u,v) \right| \cdot dudv$$

La variation est négative lorsque le vecteur $\delta\hat{\vec{M}}$ est orienté vers l'intérieur du volume d'erreur. la figure 7 présente le cas particulier où l'évolution du maillage se fait dans la direction de la normale. Prenons maintenant en considération le fait que :

$$\left[ \frac{\partial\vec{\hat{M}}(u,v)}{\partial u} \wedge \frac{\partial\vec{\hat{M}}(u,v)}{\partial v} \right] \cdot dudv = \vec{n}(u,v)d\sigma(u,v)$$

avec $\vec{n}(u,v)$ la normale unitaire en $\hat{M}(u,\ v)$ et

$$d\sigma(u,v) = \left\| \frac{\partial\hat{\vec{M}}}{\partial u} \wedge \frac{\partial\hat{\vec{M}}}{\partial v} \right\| \cdot dudv$$

l'élément d'aire.

On exprime la variation de distance entre $M$ et $\hat{M}$ :

$$\delta d(M,\ \hat{M},\ \delta\hat{\vec{M}}) = \int\int_{u,v} \left| \vec{n}(u,v)\delta\hat{\vec{M}}(u,v) \right|\ d\sigma(u,v)$$

Cette expression n'est pas facilement utilisable à cause de la valeur absolue. Nous introduisons maintenant la fonction : $\eta(u,v) = \eta(M,M,\ \vec{n}(u,v)) = 1$ si la normale est orientée vers le volume intérieur et -1 sinon, nous obtenons alors

$$\left| \vec{n}(u,v)\delta\hat{\vec{M}}(u,v) \right| = \eta(u,v)\vec{n}(u,v)\delta\hat{\vec{M}}(u,v)$$

d'où

$$\delta d(M,\ \hat{M},\ \delta\hat{\vec{M}}) = -\int\int_{u,v} \eta(u,v)\vec{n}(u,v)\delta\hat{\vec{M}}(u,v)\ d\sigma(u,v)$$

## 3 Modèle d'éléments finis triangulaires

Afin de calculer le gradient en chaque sommet du maillage à l'itération $k$ de l'algorithme d'optimisation, on paramètre le maillage par un modèle d'éléments finis triangulaires[P1] :

$$M(u,v) = \sum_{i=1}^{N} X_i \lambda_i(u,v) \qquad (4)$$

$X_i$ est un sommet du maillage défini dans $\mathbb{R}^3$ et $\lambda_i(u,v)$ est une fonction de forme adaptée à un modèle d'éléments finis triangulaires. On définit une fonction de forme sur le maillage par le biais de coordonnées barycentriques tel que cela est décrit dans le document "la méthode des éléments finis, formulation de base et problèmes linéaires", par O.C. Zienkiewicz et R.L. Taylor (afnor technique, 4ième édition, 1991). Pour cela on numérote les sommets du triangle (figure 8), et on définit un système de coordonnées $\lambda_1$, $\lambda_2$ et $\lambda_3$ liées par les relations :

$$x = \lambda_1 \cdot x_1 + \lambda_2 \cdot x_2 + \lambda_3 \cdot x_3$$

$$y = \lambda_1 \cdot y_1 + \lambda_2 \cdot y_2 + \lambda_3 \cdot y_3$$

$$1 = \lambda_1 + \lambda_2 + \lambda_3$$

Nous allons maintenant déterminer les valeurs des fonctions de base : au sommet 1, $\lambda_1 = 1$, $\lambda_2 = 0$ et $\lambda_3 = 0$. Les lignes de niveau de $\lambda_1$ sont des lignes équidistantes parallèles au côté 2 - 3 le long duquel $\lambda_1 = 0$. On peut exprimer la coordonnée $\lambda_1$ en un point $P$ par un rapport d'aires :

$$\lambda_1 = \frac{aire(P23)}{aire(123)} \qquad (5)$$

On obtient :

$$\lambda_1 = \frac{a_1 + b_1 \cdot x + c_1 \cdot y}{2A}$$

$$\lambda_2 = \frac{a_2 + b_2 \cdot x + c_2 \cdot y}{2A}$$

$$\lambda_3 = \frac{a_3 + b_3 \cdot x + c_3 \cdot y}{2A}$$

Avec :

$$A = aire(123) = \frac{1}{2} \cdot det \begin{vmatrix} 1 & x_1 & y_1 \\ 1 & x_2 & y_2 \\ 1 & x_3 & y_3 \end{vmatrix}$$

$$a_1 = x_2 \cdot y_3 - x_3 \cdot y_2$$

$$b_1 = y_2 - y_3$$

$$c_1 = x_3 - x_2$$

On calcule les valeurs $a_2$, $b_2$, $c_2$, $a_3$, $b_3$, et $c_3$ par permutation circulaire des indices 1, 2 et 3.

**4 Evolution de surface**

L'évolution du maillage peut ainsi s'écrire :

$$\delta d(M, \hat{M}, \delta \vec{X}_1, \delta \vec{X}_2, \ldots, \delta \vec{X}_n) = -\sum_{i=1}^{N} \int \int_{u,v} \eta(u,v) \vec{n}(u,v) \delta \vec{X}_i \lambda_i(u,v) d\sigma(u,v)$$

on en déduit la dérivée partielle de la distance pour un sommet $X_i$ :

$$\frac{\partial V}{\partial X_i} = -\int \int_{u,v \in Supp(\lambda_i)} \eta(u,v) \vec{n}(u,v) \lambda_i(u,v) d\sigma(u,v)$$

L'algorithme de gradient pour un sommet $X_i$ s'écrit sous la forme :

$$X_i^{k+1} = X_i^k - \gamma_i \frac{\partial V^k}{\partial X_i}$$

où $\gamma_i$ représente un pas adaptatif avec $\gamma_i \in [\gamma_{min}, \gamma_0]$. Au départ le pas est initialisé à $\gamma_0$, puis il est multiplié par $k$ (avec $k < 1$ ) en présence d'une oscillation, c'est à dire lorsque

$$< \frac{\partial V^{k+1}}{\partial X_i}, \frac{\partial V^k}{\partial X_i} > < 0$$

Le comportement de l'algorithme d'optimisation peut-être illustré en 2d (figures 10 et 11), l'évolution du sommet $X_i$ du modèle $M$ est liée à la somme des vecteurs d'orientation du modèle par rapport à la courbe originale $M$, pondérés par la fonction de forme qui vaut 1 en $X_i$ et décroît en 0 le long des segments voisins de $X_i$. En 3d le principe est le même avec une fonction de forme définie sur les triangles voisins du sommet $X_i$.

**Revendications**

**1.** Procédé de simplification d'un maillage source M formé d'une pluralité de surfaces définies par des sommets, des faces et des orientations sur ces dernières, ledit procédé mettant en oeuvre une étape de décimation par fusion d'arête, consistant à associer à une arête à décimer, définie par deux sommets (11, 12), un sommet unique (13), de façon à obtenir un maillage simplifié M',
**caractérisé en ce qu'**il comprend une étape de pseudo-optimisation après ladite étape de décimation par fusion d'une arêtes, positionnant le sommet résultant de ladite fusion en fonction d'un critère tenant compte du nombre d'arêtes vives autour de chacun des deux sommets formant l'arête à fusionner, de manière à réduire la déviation géométrique entre ledit maillage source M et ledit maillage simplifié M'.

**2.** Procédé de simplification d'un maillage source selon la revendication 1, **caractérisé en ce que** ladite étape de pseudo-optimisation comprend une étape de dénombrement des arêtes vives autour des deux sommets formant l'arête à fusionner, et une étape de positionnement dudit sommet résultant, dans laquelle on distingue les deux cas suivants :

- si les nombres d'arêtes vives sont les mêmes autour des deux sommets, on place le sommet résultant de la fusion au milieu du segment reliant lesdits sommets (42, 44) ;
- si les nombres d'arêtes vives sont différents, ou place le sommet résultant de la fusion sur le sommet présentant le plus grand nombre d'arêtes vives (43,45).

**3.** Procédé de simplification d'un maillage source selon l'une quelconque des revendications 1 et 2, **caractérisé en**

**ce qu'**il comprend une étape de sélection d'une fusion d'arête à effectuer, parmi toutes les fusions d'arête possibles, tenant compte :

- d'au moins une information représentative de la courbure définie localement autour de l'arête considérée ;
- d'au moins une information représentative de la dynamique géométrique définie localement.

4. Procédé de simplification d'un maillage source selon la revendication 3, **caractérisé en ce que** ladite étape de sélection met en oeuvre une queue de priorité des arêtes à fusionner, en fonction d'un critère prioritaire, ladite information représentative de la courbure, puis d'un critère secondaire, ladite information représentative de la dynamique géométrique.

5. Procédé de simplification d'un maillage source selon la revendication 4, **caractérisé en ce que** ladite étape de sélection gère un seuil de courbure, seules les arêtes ayant une courbure inférieure audit seuil étant considérées pour l'application dudit critère secondaire,
ledit seuil étant augmenté lorsqu'aucune arête ne présente plus une courbure inférieure à ce dernier.

6. Procédé de simplification d'un maillage source selon l'une quelconque des revendications 1 à 5, **caractérisé en ce que** ladite information représentative de la dynamique géométrique appartient au groupe comprenant :

- longueur de l'arête considérée ;
- une moyenne des surfaces des faces avoisinant ladite arête considérée ;
- une moyenne des longueurs des arêtes adjacentes aux sommets formant ladite arête considérée ;
- une combinaison de longueurs d'arêtes et/ou de surfaces de faces.

7. Procédé de simplification d'un maillage source selon l'une quelconque des revendications 1 à 6, **caractérisé en ce que** la décimation est interrompue en fonction d'un des critères appartenant au groupe comprenant :

- un taux de compression atteint ;
- une complexité géométrique atteinte, exprimée par un nombre de sommets ou de faces ;
- un seuil de courbure atteint.

8. Procédé de simplification d'un maillage source selon l'une quelconque des revendications 1 à 7, **caractérisé en ce qu'**il constitue une étape d'initialisation d'un procédé d'optimisation géométrique d'un maillage.

9. Procédé d'optimisation géométrique d'un maillage source, **caractérisé en ce qu'**il comprend une étape d'initialisation mettant en oeuvre le procédé de simplification de l'une quelconque des revendications 1 à 7.

10. Procédé de codage d'un maillage source (M) selon la revendication 9, représentatif d'un objet en trois dimensions, délivrant un maillage simplifié (M') correspondant audit maillage source (M), lesdits maillages étant définis par un ensemble de sommets, d'arêtes et/ou de faces, **caractérisé en qu'**il met en oeuvre une étape de simplification selon l'une quelconque des revendications 1 à 7, puis une étape de minimisation d'un volume compris entre ledit maillage source (M) et ledit maillage simplifié (M').

11. Procédé de codage d'un maillage source selon la revendication 10, **caractérisé en ce que**, chacun desdits maillages étant défini par la position de chacun de ses sommets, ladite étape de minimisation assure la détermination des positions des sommets $(X_1, X_2,... X_n)$ dudit maillage simplifié (M') minimisant le volume $V(M, M')$ entre ledit maillage source et ledit maillage simplifié.

12. Procédé de codage d'un maillage source selon l'une quelconque des revendications 10 et 11, **caractérisé en ce que** ladite étape de minimisation met en oeuvre un processus itératif optimisant progressivement les positions des sommets dudit maillage simplifié (M').

13. Procédé de codage d'un maillage source selon la revendication 12, **caractérisé en ce que** ledit processus itératif est interrompu lorsqu'au moins un des critères d'arrêt suivants est atteint :

- un nombre maximum d'itérations ;
- une différence entre deux vecteurs déplacement successifs des positions des sommets inférieure à un seuil prédéterminé (Epsilon).

**14.** Procédé de codage d'un maillage source selon l'une quelconque des revendications 11 à 13, **caractérisé en ce que** ladite étape de minimisation met en oeuvre une méthode de gradient adaptatif.

**15.** Procédé de codage d'un maillage source selon la revendication 14, **caractérisé en ce que** ladite méthode de gradient adaptatif repose sur les opérations suivantes:

- sélection d'un vecteur $X_p$ de $\mathbf{R}^{3n}$ ($n \geq 1$) dudit maillage simplifié, et calcul du gradient $\nabla E(X_p)$ en $X_p$ de la fonction à minimiser :

$$E = d(M, M'(X_1,...,X_n)) \; ;$$

- détermination de la position $X_p^*$ de $X_p$ dudit maillage, selon la relation définie à l'itération k+1 par :

$$X_p^{k+1} = X_p^k - \gamma_k \frac{L\,E(X_p^k)}{\left\| L\,E(X_p^k) \right\|}$$

k variant de 0 à n-1 et $\gamma_k$ étant le pas de ladite relation.

**16.** Procédé de codage d'un maillage source selon l'une quelconque des revendications 10 à 15, **caractérisé en ce que**, à chaque itération, on détermine une variation élémentaire dudit volume correspondant à un champ de vecteurs $\delta\vec{M}'$, et **en ce que**, la surface étant paramétrée par u et v, de façon qu'un vecteur $\delta\vec{M}'$ s'exprime sous la forme $\delta\vec{M}'(u, v)$, ladite variation élémemaire est assimilée au parallélépipède généré par l'évolution de l'élément de surface dudv dans la direction $\delta\vec{M}'(u, v)$.

**17.** Procédé de codage d'un maillage source selon l'une quelconque des revendications 10 à 16, **caractérisé en ce que** ledit maillage simplifié est paramétré à l'aide d'un modèle d'éléments finis.

**18.** Procédé de codage d'un maillage source selon la revendication 17, **caractérisé en ce que** lesdits éléments finis sont obtenus à l'aide d'un interpolateur affine.

**19.** Procédé de codage d'un maillage source selon l'une quelconque des revendications 10 à 18, **caractérisé en ce qu'**il met en oeuvre un codage progressif dudit maillage simplifié, par décimation d'un sommet et optimisation locale ou par décimation d'un ensemble sommets et optimisation globale.

**20.** Procédé de codage d'un maillage source selon l'une quelconque des revendications 10 à 19, **caractérisé en ce qu'**il comprend une étape de limitation de la dégradation due à une transformation élémentaire, mettant en oeuvre une queue de priorité sur les transformations élémentaires.

**21.** Procédé de codage d'un maillage source selon la revendication 20,
**caractérisé en ce que** ladite étape de limitation de la dégradation due à une transformation élémentaire, c'est-à-dire une fusion d'arête, définie par deux sommets, comprend les étapes de :

- calcul d'un coût pour chaque transformation élémentaire possible ;
- réalisation de la transformation élémentaire de moindre coût ;
- recalcul des coûts des transformations élémentaires modifiées par la transformation élémentaire précédente ;
- ajout des nouvelles transformations élémentaires créées et calcul des coûts correspondants.

**22.** Procédé de codage d'un maillage source selon la revendication 21, **caractérisé en ce que** le coût d'une transformation élémentaire ($T_i$) s'exprime par :

$$C(T_i(X_i,X_j)) = \max d_2 (V_M, F(X_i^f))$$

avec :

$T_i$       transformation fusionnant deux sommets $X_i$ et $X_j$ dudit maillage simplifié M' ;

$X_i^f$    le sommet dudit maillage simplifié M' résultant de ladite transformation ;

$F(X_i^f)$    les faces dudit maillage simplifié M' avoisinant le sommet $X_i^f$ après ladite transformation ;

$V_M$    ensemble des sommets dudit maillage source M appartenant aux faces ayant été intersectées lors du calcul de l'orientation des surfaces pendant ladite minimisation.

23. Application du procédé de codage d'un maillage source selon l'une quelconque des revendications 1 à 22 à au moins un des domaines suivant :

- la réalité virtuelle ;
- la simulation scientifique ;
- la modélisation.

**Claims**

1. Method for simplifying a source mesh M formed by a plurality of surfaces defined by vertices, faces and orientations on the latter, the said method implementing a step of decimation by edge collapsing, consisting in associating a single vertex (13) with an edge to be decimated, which is defined by two vertices (11, 12), so as to obtain a simplified mesh M',
   **characterised in that** it comprises a pseudo-optimisation step after the said step of decimation by collapsing one of the edges, which positions the vertex resulting from the said collapse as a function of a criterion taking into account the number of sharp edges around each of the two vertices forming the edge to be collapsed, so as to reduce the geometrical deviation between the said source mesh M and the said simplified mesh M'.

2. Method for simplifying a source mesh according to Claim 1, **characterised in that** the said pseudo-optimisation step comprises a step of counting the sharp edges around the two vertices forming the edge to be collapsed, and a step of positioning the said resulting vertex, in which distinction is made between the two following cases:

   - if the numbers of sharp edges are the same around both vertices, the vertex resulting from the collapse is placed in the middle of the segment joining the said vertices (42, 44);
   - if the numbers of sharp edges are different, the vertex resulting from the collapse is placed on the vertex having the larger number of sharp edges (43, 45).

3. Method for simplifying a source mesh according to either one of Claims 1 and 2, **characterised in that** it comprises a step of selecting an edge collapse to be carried out, from among all the possible edge collapses, taking into account:

   - at least one information item representing the curvature defined locally around the edge in question; and
   - at least one information item representing the locally defined geometrical dynamics.

4. Method for simplifying a source mesh according to Claim 3, **characterised in that** the said selection step implements a priority queue of the edges to be collapsed, as a function of a priority criterion, the said information item representing the curvature, then a secondary criterion, the said information item representing the geometrical dynamics.

5. Method for simplifying a source mesh according to Claim 4, **characterised in that** the said selection step operates with a curvature threshold, only the edges having a curvature less than the said threshold being considered for application of the said secondary criterion, the said threshold being increased when no edge any longer has a curvature less than it.

6. Method for simplifying a source mesh according to any one of Claims 1 to 5, **characterised in that** the said information item representing the geometrical dynamics belongs to the group comprising:

   - length of the edge in question;
   - an average of the areas of the faces neighbouring the said edge in question;
   - an average of the lengths of the edges adjacent to the vertices forming the said edge in question;
   - a combination of edge lengths and/or face areas.

7. Method for simplifying a source mesh according to any one of Claims 1 to 6, **characterised in that** the decimation is stopped as a function of one of the criteria belonging to the group comprising:

   - a compression ratio having been reached;
   - a geometrical complexity having been reached, expressed by a number of vertices or faces;
   - a curvature threshold having been reached.

8. Method for simplifying a source mesh according to any one of Claims 1 to 7, **characterised in that** it constitutes an initialisation step of a method for geometrical optimisation of a mesh.

9. Method for geometrically optimising a source mesh, **characterised in that** it comprises an initialisation step implementing the simplification method according to any one of Claims 1 to 7.

10. Method for coding a source mesh (M) according to Claim 9, representing an object in three dimensions, delivering a simplified mesh (M') corresponding to the said source mesh (M), the said meshes being defined by a set of vertices, edges and/or faces,
   **characterised in that** it implements a simplification step according to any one of Claims 1 to 7, then a step of minimising a volume contained between the said source mesh (M) and the said simplified mesh (M').

11. Method for coding a source mesh according to Claim 10, **characterised in that**, each of the said meshes being defined by the position of each of its vertices, the said minimisation step determines the positions of the vertices $(X_1, X_2, ... X_n)$ of the said simplified mesh (M') which minimise the volume V(M, M') between the said source mesh and the said simplified mesh.

12. Method for coding a source mesh according to either one of Claims 10 and 11, **characterised in that** the said minimisation step implements an iterative process which progressively optimises the positions of the vertices of the said simplified mesh (M').

13. Method for coding a source mesh according to Claim 12, **characterised in that** the said iterative process is stopped when at least one of the following termination criteria is achieved:

   - a maximum number of iterations;
   - a difference between two successive displacement vectors of the positions of the vertices being less than a predetermined threshold (Epsilon).

14. Method for coding a source mesh according to any one of Claims 11 to 13, **characterised in that** the said minimisation step implements an adaptive gradient method.

15. Method for coding a source mesh according to Claim 14, **characterised in that** the said adaptive gradient method is based on the following operations:

   - selecting a vector $X_p$ in $R^{3n}$ (n 1) of the said simplified mesh and calculating the gradient $\nabla E(X_p)$ with respect to $X_p$ of the function to be minimised:

$$E = d(M, M' (X_1,...,X_n))$$

   - determining the position $X_p{}^*$ of $X_p$ in the said mesh, according to the relationship defined at iteration k+1 by:

$$X_p{}^{k+1} = X_p{}^k - \gamma_k \times \frac{\nabla E(X_p{}^k)}{\left\| \nabla E(X_p{}^k) \right\|}$$

   with k varying from 0 to n-1 and $\gamma_k$ being the step size of the said relationship.

16. Method for coding a source mesh according to any one of Claims 10 to 15, **characterised in that**, at each iteration, an elementary variation of the said volume corresponding to a field of vectors $\delta\vec{M}'$ is determined, and **in that**, the surface being parameterised by u and v so that a vector $\delta\vec{M}'$ is expressed in the form $\delta\vec{M}'(u, v)$, the said elementary variation is approximated to the parallelepiped generated by the evolution of the surface element dudv in the direction $\delta\vec{M}'(u,v)$.

**17.** Method for coding a source mesh according to any one of Claims 10 to 16, **characterised in that** the said simplified mesh is parameterised with the aid of a finite-element model.

**18.** Method for coding a source mesh according to Claim 17, **characterised in that** the said finite elements are obtained with the aid of an affine interpolator.

**19.** Method for coding a source mesh according to any one of Claims 10 to 18, **characterised in that** it implements progressive coding of the said simplified mesh, by decimation of a vertex and local optimisation or by decimation of a set of vertices and global optimisation.

**20.** Method for coding a source mesh according to any one of Claims 10 to 19, **characterised in that** it comprises a step of limiting the degradation due to an elementary transformation, implementing a priority queue governing the elementary transformations.

**21.** Method for coding a source mesh according to Claim 20, **characterised in that** the said step of limiting the degradation due to an elementary transformation, that is to say collapsing an edge defined by two vertices, comprises the steps of:

- calculating a cost for each possible elementary transformation;
- performing the elementary transformation with the lowest cost;
- recalculating the costs of the elementary transformations after they have been modified by the preceding elementary transformation;
- adding new elementary transformations which have been created, and calculating the corresponding costs.

**22.** Method for coding a source mesh according to Claim 21, **characterised in that** the cost of an elementary transformation ($T_i$) is expressed by:

$$C(T_i(X_i,X_j))=\max d_2(V_M,F(X_i^f))$$

with:

$T_i$ transformation collapsing two vertices $X_i$ and $X_j$ of the said simplified mesh M';
$X_i^f$ the vertex of the said simplified mesh M' resulting from the said transformation;
$F(X_i^f)$ the faces of the said simplified mesh M' neighbouring the vertex $X_i^f$ after the said transformation;
$V_M$ set of all the vertices of the said source mesh M belonging to the faces which were intersected when calculating the orientation of the surfaces during the said minimisation.

**23.** Application of the method for coding a source mesh according to any one of Claims 1 to 22, to at least one of the following fields:

- virtual reality;
- scientific simulation
- modelling.

**Patentansprüche**

**1.** Vereinfachungsverfahren eines Quellennetzwerkes M, das von einer Vielzahl von Flächen gebildet wird, welche durch Knoten, Oberflächen und Richtungsangaben auf diesen Oberflächen definiert sind, wobei das Verfahren einen Löschungsschritt (etápe de décimation) durch Zusammenziehen (fusion) von Kanten anwendet, welcher darin besteht, dass zu einer von zwei Knoten (11, 12) bestimmten zu löschenden Kante ein einzelner Knoten (13) zugeordnet wird, um ein vereinfachtes Netzwerk M' zu erhalten,
**dadurch gekennzeichnet, dass** es nach dem erwähnten Löschungsschritt durch Zusammenfügen von Kanten einen Pseudo-Optimierungsschritt umfasst, wobei der Knoten, der sich aus dem Zusammenziehen von Kanten ergibt, als Funktion eines Kriteriums positioniert wird, welches die Zahl der scharfen Kanten berücksichtigt, die sich um jeden der beiden die zusammenzuziehende Kante bildende Punkte bilden, um die geometrische Abweichung zwischen dem Quellennetzwerk M und dem vereinfachten Netzwerk M' zu verringern.

2.  Vereinfachungsverfahren eines Quellennetzwerkes nach Anspruch 1, **dadurch gekennzeichnet, dass** der Pseudo-Optimierungsschritt einen Schritt umfasst, der im Zählen der sich um die zwei Knoten, welche die zusammenzuziehende Kante bilden, befindenden scharfen Kanten besteht, sowie einen Schritt zum Positionieren des sich ergebenden Knotens, wobei die zwei folgenden Fälle unterschieden werden:

    -   falls es um die zwei Knoten dieselbe Zahl von scharfen Kanten gibt, so wird der sich aus dem Zusammenziehen ergebende Knoten in die Mitte des Segmentes gelegt, das diese zwei Knoten (42, 44) miteinander verbindet;
    -   falls die Zahlen von scharfen Kanten verschieden sind, so wird der sich aus dem Zusammenziehen ergebende Knoten auf den Knoten gelegt, der die größte Zahl scharfer Kanten (43, 45) aufweist.

3.  Vereinfachungsverfahren eines Quellennetzwerkes nach einem der Ansprüche 1 und 2, **dadurch gekennzeichnet, dass** es einen Auswahlschritt umfasst zum Auswählen einer zusammenzuziehenden Kante aus allen möglichen zusammenziehbaren Kanten, wobei berücksichtigt wird:

    -   mindestens eine repräsentative Information betreffend die lokal um die betrachtete Kante definierte Krümmung und,
    -   mindestens eine Information betreffend die örtlich definierte dynamische Geometrie.

4.  Vereinfachungsverfahren für ein Quellennetzwerk nach Anspruch 3, **dadurch gekennzeichnet, dass** der Auswahlschritt gemäß einer Prioritätenfolge der zusammenzuziehenden Kanten erfolgt, die es ermöglicht, die Auswahl in Abhängigkeit von einem primären Kriterium (critère prioritaire), der besagten Information betreffend die Krümmung, und einem sekundären Kriterium (critère secondaire), der besagten Information betreffend die dynamische Geometrie, vorzunehmen.

5.  Vereinfachungsverfahren für ein Quellennetzwerk nach Anspruch 4, **dadurch gekennzeichnet, dass** im Auswahlschritt ein Krümmungsschwellenwert verwendet wird, wobei nur diejenigen Kanten, deren Krümmungen unterhalb von diesem Schwellenwert liegen, für die Anwendung des sekundären Kriteriums berücksichtigt werden, und wobei dieser Schwellenwert dann erhöht wird, wenn es keine Kante mit einer geringeren Krümmung als dem letzten Schwellenwert (ce dernier) mehr gibt.

6.  Vereinfachungsverfahren für ein Quellennetzwerk nach einem der Ansprüche 1 bis 5, **dadurch gekennzeichnet, dass** die Information betreffend die dynamische Geometrie zu der folgendes umfassenden Gruppe gehört:

    -   Länge der betrachteten Kante,

    -   einen Mittelwert der Oberflächen der zur betrachteten Kante benachbarten Flächen,

    -   einen Mittelwert der Länge derjenigen Kanten, die mit jenen Knoten verbunden (adjacentes) sind, die die betrachtete Kante bilden.

    -   eine Kombination der Länge der Kanten und/oder der Oberflächen der Flächen.

7.  Vereinfachungsverfahren für ein Quellennetzwerk nach einem der Ansprüche 1 bis 6, **dadurch gekennzeichnet, dass** die Löschung unterbrochen wird in Abhängigkeit von einem Kriterium aus derjenigen Gruppe, die umfasst:

    -   eine erreichte Kompressionsrate;

    -   eine erreichte geometrische Komplexität, ausgedrückt durch eine Zahl von Knoten oder von Flächen;

    -   ein erreichter Krümmungsschwellenwert.

8.  Vereinfachungsverfahren eines Quellennetzwerkes nach einem der Ansprüche 1 bis 7, **dadurch gekennzeichnet, dass** es einen Initialisierungsschritt eines geometrischen Optimierungsschritts eines Netzwerkes bildet.

**9.** Geometrisches Optimierungsverfahren eines Quellennetzwerkes, **dadurch gekennzeichnet, dass** es einen Initialisierungsschritt umfasst, in dem das Vereinfachungsverfahren aus einem der Ansprüche 1 bis 7 durchgeführt wird.

**10.** Kodierungsverfahren eines Quellennetzwerkes (M) nach Anspruch 9, das für einen dreidimensionalen Gegenstand repräsentiert und ein vereinfachtes Netzwerk (M') liefert, das dem Quellennetzwerk (M) entspricht, wobei diese Netzwerke durch eine Menge von Knoten, von Kanten und/oder von Flächen definiert werden, **dadurch gekennzeichnet, dass** darin ein Vereinfachungsschritt nach einem der Ansprüche 1 bis 7 durchgeführt wird, gefolgt von einem Minimierungsschritt eines zwischen dem Quellennetzwerk (M) und dem vereinfachten Netzwerk (M') befindlichen Volumens.

**11.** Kodierungsverfahren eines Quellennetzwerkes nach Anspruch 10, **dadurch gekennzeichnet, dass**, jedes der erwähnten Netzwerke durch die Position eines jeden Knotens definiert wird und der Minimierungsschritt sicherstellt, dass das Festlegen der Positionen der Knoten ($X_1$, $X_2$, ..... $X_n$) des vereinfachten Netzwerks (M'), das zwischen dem Quellennetzwerk und dem vereinfachten Netzwerk befindliche Volumen V(M, M') minimiert.

**12.** Kodierungsverfahren eines Quellennetzwerkes nach einem der Ansprüche 10 und 11, **dadurch gekennzeichnet, dass** im Minimierungsschritt ein iteratives Verfahren durchgeführt wird, das in fortschreitender Weise die Positionen der Knoten des vereinfachten Netzwerkes (M') optimiert.

**13.** Kodierungsverfahren eines Quellennetzwerkes nach Anspruch 12, **dadurch gekennzeichnet, dass** das iterative Verfahren abgebrochen wird, wenn mindestens eines der folgenden Abbruchkriterien erfüllt wird:

- Erreichen einer Höchstzahl von Iterationen;

**14.** Kodierungsverfahren eines Quellennetzwerkes nach einem der Ansprüche 11 bis 13, **dadurch gekennzeichnet, dass** der Minimierungsschritt eine adaptive Gradientenmethode (méthode de gradient adaptatif) anwendet.

**15.** Kodierungsverfahren eines Quellennetzwerkes nach Anspruch 14, **dadurch gekennzeichnet, dass** die adaptive Gradientenmethode auf den folgenden Vorgehensschritten beruht:

- Wahl eines Vektors $X_p$ aus $R^{3n}$ ($n \geq 1$) des erwähnten vereinfachten Netzwerkes und Berechnung des Gradienten $\nabla E(X_p)$ nach $X_p$, der zu minimierenden Funktion:

$$E \approx d(M, M'(X_1, .........., X_n));$$

- Festlegen der Position $X_p^*$ von $X_p$ des erwähnten Netzwerkes, nach dem für die Iteration k+1 definierten Ausdruck:

$$X_p^{k+1} = X_p^k - \gamma_k \times \frac{\nabla E(X_p^k)}{\left\|\nabla E(X_p^k)\right\|}$$

wobei k von 0 bis n-1 variiert und $\gamma_k$ der Schritt des Ausdrucks ist.

**16.** Kodierungsverfahren eines Quellennetzwerkes nach einem der Ansprüche 10 bis 15, **dadurch gekennzeichnet, dass** bei jeder Iteration eine elementare Variation des einem Vektorfeld $\delta_{M'}^0$ entsprechenden Volumens bestimmt wird und, daß die Oberfläche durch u und v parametrisiert ist, so dass ein Vektor der Form $\delta_{M'}^0$ in der Form $\delta_{M'}^0$ (u, v) ausgedrückt wird, die erwähnte elementare Variation dem durch die Bewegung des Oberflächenelementes erzeugten Quaders dudv in die Richtung $\delta_{M'}^0$ (u, v) assimiliert wird.

**17.** Kodierungsverfahren eines Quellennetzwerkes nach einem der Ansprüche 10 bis 16, **dadurch gekennzeichnet, dass** das vereinfachte Netzwerk mit Hilfe eines finiten Elementmodells parametrisiert wird.

**18.** Kodierungsverfahren eines Quellennetzwerkes nach Anspruch 17, **dadurch gekennzeichnet, dass** die erwähnten finiten Elemente mit Hilfe eines affinen Interpolators erhalten werden.

**19.** Kodierungsverfahren eines Quellennetzwerkes nach einem der Ansprüche 10 bis 18, **dadurch gekennzeichnet, dass** darin eine progressive Kodierung des vereinfachten Netzwerkes durch Löschen eines Knotens und örtlicher Optimierung oder durch Löschen einer Menge von Knoten und globaler Optimierung durchgeführt wird.

**20.** Kodierungsverfahren eines Quellennetzwerkes nach einem der Ansprüche 10 bis 19, **dadurch gekennzeichnet, dass** darin einen Schritt zum Begrenzen der durch eine elementare Transformation verursachten Verschlechterung umfasst, wobei eine Prioritätenfolge über die elementaren Transformationen durchgeführt wird.

**21.** Kodierungsverfahren eines Quellennetzwerkes nach Anspruch 20, **dadurch gekennzeichnet, dass** der Schritt zum Begrenzen der durch eine elementare Transformation verursachten Verringerung, d. h., das Zusammenziehen einer durch zwei Knoten definierten Kante, die folgenden Schritte umfasst:

- Berechnung der Kosten für jede mögliche elementare Transformation;
- Realisierung der elementaren Transformation mit den geringsten Kosten;
- erneute Berechnung der Kosten für elementare Transformationen, die von den vorhergehenden elementaren Transformationen geändert wurden;
- Hinzufügen der neuen erzeugten elementaren Transformationen und Berechnung der entsprechenden Kosten.

**22.** Kodierungsverfahren eines Quellennetzwerkes nach Anspruch 21, **dadurch gekennzeichnet, dass** die Kosten einer elementaren Transformation ($T_i$) wie folgt ausgedrückt werden:

$$C(T_i(X_i, X_j)) = \max d_2 (V_M, F(X_j^f)),$$

wobei:

$T_i$  die Transformation ist, welche die zwei Knoten $X_i$ und $X_j$ des vereinfachten Netzwerkes M' zusammenfügt;
$X_j^f$  der Knoten des vereinfachten Netzwerkes M' ist; der sich aus der erwähnten Transformation ergibt;
$F(X_j^f)$  die Flächen des erwähnten vereinfachten Netzwerks M' in der Umgebung des Knotens $X_j^f$ nach der erwähnten Transformation sind;
$V_M$  die Menge der Knoten des erwähnten Quellennetzwerkes M ist, die auf den Flächen liegen, die beim Berechnen der Orientierung der Flächen während der erwähnten Minimierung geschnitten wurden.

**23.** Anwendung des Kodierungsverfahrens eines Quellennetzwerkes nach einem der Ansprüche 1 bis 22 auf mindestens einen der folgenden Bereiche:

- virtuelle Realität;
- wissenschaftliche Simulation;
- modellmäßige Darstellung.

Fig. 1

Fig. 2

Fig. 3

○ Position de la solution initiale

•—• Arête à fusionner

Fig. 4

Fig. 5

Fig. 6

Fig. 7

## Fig. 8

## Fig. 9

## Fig. 10

## Fig. 11

Fig. 12

Fig. 13

162

Hauteur reportée     Hauteur

h

Origine

h

Côté longueur maxi

161

Echantillonnage

## Fig. 14

$X_i$

$X_j$

$n$

$n_M$

$X_M$

$X_i$

$n$   $X_j$

$n_M$

$X_M$

Orientation relative
des surfaces

## Fig. 15

$X_i$

$X_j$

● Sommets à fusionner

$X_i$

max

○ $V_M$

## Fig. 16

191 — | Copie : M ----> M' |

192 — | Recherche des transformations élémentaires réalisables |

193 —
197 — | Calcul des coûts énergétiques des transformations (aprés optimisation) |

| Réalisation de la transformation de moindre coût (décimation) |

194

(n-m) | Mise à jour des coûts dans le voisinage affecté par la transformation précédente |

195

| Ajout de nouvelles transformations et calcul des coûts correspondants |

196

## Fig. 17

| Initialisation en position | — 201

207 | Calcul du gradient | — 202

| Déplacement | — 203

| Evolution du pas | — 204

| Test de convergence | — 205

— 206

## Fig. 18

Fig. 19

Fig. 20

234 233 236 235 232

Fig. 21

242 243 241 245 244

Fig. 22

(a) Modèle original   (b) Itération 1   (c) Itération 2

(d) Itération 3   (e) Itération 4   (f) Itération 5

(g) Itération 6   (h) Itération 7   (i) Itération 8

(j) Itération 9   (k) Itération 10   (l) Itération 11   (m) Itération 12

Fig. 23

Fig. 24

Fig. 25

Faces à supprimer

Positions initiales

Fig. 26

Transformation à mettre à jour

Arête modifiée

Arête fusionnée

Sommet à optimiser

Fig. 27

Transformations nouvelles